# EUROPEAN PATENT APPLICATION

(11) **EP 4 787 756 A1**
(43) Date of publication of application: **05.08.2026**
(21) Application number: 23953717.8
(22) Date of filing: 28.09.2023
(51) Int. Cl.: H04L 5/00

(54) **COMMUNICATION METHOD AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: TIAN, Wenqiang, Dongguan, Guangdong 523860 (CN); SHEN, Jia, Dongguan, Guangdong 523860 (CN)
(74) Representative: Taor, Simon Edward William
(86) International application number: PCT/CN2023/122749
(87) International publication number: WO 2025/065570

(57) **Abstract**

The present application relates to a communication method and a communication device. The method comprises: a first communication device transmitting a reference signal and first data, wherein the reference signal is superimposed with transmission resources of the first data. In the embodiments of the present application, a reference signal and first data are transmitted in a superimposed manner, such that compared with a situation wherein the transmission of a signal and the transmission of the first data independently occupy different time-frequency resources, the present application can reduce the overheads of resources occupied by the transmission.

## Description

### TECHNICAL FIELD

The present disclosure relates to the technical field of communications, and more particularly to, communication methods and communication devices.

### BACKGROUND

A Synchronization Signal Block/Physical Broadcast Channel (PBCH) Block (SSB) is a reference signal. The SSB may include: a Primary Synchronization Signal (PSS), a Secondary Synchronization Signal (SSS), a PBCH, a reference signal Demodulation Reference Symbol (DMRS) of the PBCH and the like. The aforementioned signals usually occupy independent time-frequency resources.

### SUMMARY

Embodiments of the present disclosure provide communication methods and communication devices, which can reduce resource overhead occupied by transmission.

The embodiments of the present disclosure provide a communication method including a following operation.

A first communication device performs transmission of a reference signal and first data, where transmission resources for the reference signal are superimposed with transmission resources for the first data.

The embodiments of the present disclosure provide a communication method including a following operation.

A second communication device receives a reference signal and first data, where transmission resources for the reference signal are superimposed with transmission resources for the first data.

The embodiments of the present disclosure provide a first communication device including a sending unit.

The sending unit is configured to perform transmission of a reference signal and first data, where transmission resources for the reference signal are superimposed with transmission resources for the first data.

The embodiments of the present disclosure provide a second communication device including a receiving unit.

The receiving unit is configured to receive a reference signal and first data, where transmission resources for the reference signal are superimposed with transmission resources for the first data.

The embodiments of the present disclosure provide a communication device including a transceiver, a processor, and a memory. The memory is configured to store a computer program, the transceiver is configured to communicate with other devices, and the processor is configured to invoke and execute the computer program stored in the memory, to cause the communication device to perform the aforementioned communication methods.

The embodiments of the present disclosure provide a chip configured to implement the aforementioned communication methods.

Specifically, the chip includes a processor configured to invoke and execute a computer program from a memory, to enable a device on which the chip is mounted to perform the aforementioned communication methods.

The embodiments of the present disclosure provide a computer-readable storage medium configured to store a computer program that, when executed by a device, causes the device to perform the aforementioned communication methods.

The embodiments of the present disclosure provide a computer program product including computer program instructions. The computer program instructions cause a computer to perform the aforementioned communication methods.

The embodiments of the present disclosure provide a computer program that, when executed on a computer, causes the computer to perform the aforementioned communication methods.

According to the embodiments of the present disclosure, by the superimposed transmission of the reference signal and the first data, the resource overhead occupied by the transmission can be reduced as compared with the case that the transmission of the signal and the transmission of the first data independently occupy different time-frequency resources.

### BRIEF DESCRIPTION OF THE DRAWINGS

FIG. 1 is a schematic diagram of an application scenario of the embodiments of the present disclosure.
FIG. 2 is a schematic structural diagram of a 5th-Generation (5G) New Radio (NR) SSB.
FIG. 3 is a schematic diagram of a basic structure of a neural network.
FIG. 4 is a schematic diagram of a layer architecture of a convolutional neural network.
FIG. 5 is a schematic flowchart of a communication method according to an embodiment of the present disclosure.
FIG. 6 is a schematic flowchart of a communication method according to an embodiment of the present disclosure.
FIG. 7 is a schematic diagram where transmission resources are completely superimposed according to an embodiment of the present disclosure.
FIG. 8 is a schematic diagram where time-domain resources are completely superimposed according to an embodiment of the present disclosure.
FIG. 9 is a schematic diagram where frequency-domain resources are not completely superimposed in an embodiment of the present disclosure.
FIG. 10 is a schematic diagram where non-consecutive symbols are completely superimposed according to an embodiment of the present disclosure.
FIG. 11 is a schematic diagram of a grouping manner for non-consecutive symbols according to an embodiment of the present disclosure.
FIG. 12 is a schematic diagram where non-consecutive carriers are completely superimposed according to an embodiment of the present disclosure.
FIG. 13 is a schematic diagram where both non-consecutive symbols and non-consecutive carriers are completely superimposed according to an embodiment of the present disclosure.
FIG. 14 to FIG. 17 are schematic diagrams where transmission resources for multiple types of reference signals are respectively superimposed with transmission resources for a part of first data according to the embodiment of the present disclosure.
FIG. 18 is a schematic diagram where transmission resources for multiple types of reference signals are completely superimposed with transmission resources for first data according to an embodiment of the present disclosure.
FIG. 19 to FIG. 21 are schematic diagrams where time-frequency domain resources are multiplexed for a part of reference signals and first data according to an embodiment of the present disclosure.
FIG. 22A, FIG. 22B and FIG. 23 are schematic diagrams where non-superimposed resources for transmission of a synchronization signal are reserved in superimposed resources according to the embodiment of the present disclosure.
FIG. 24 to FIG. 26 are schematic diagrams where time-frequency domain resources are multiplexed for a reference signal and a part of first data according to an embodiment of the present disclosure.
FIG. 27A, FIG. 27B and FIG. 28 are schematic diagrams where a part of resources are reserved for only transmission of first data according to the embodiment of the present disclosure.
FIG. 29, FIG. 30A and FIG. 30B are schematic diagrams of a reference signal and first data that are transmitted in a superimposed manner according to an embodiment of the present disclosure.
FIG. 31 is a schematic block diagram of a first communication device according to an embodiment of the present disclosure.
FIG. 32 is a schematic block diagram of a second communication device according to an embodiment of the present disclosure.
FIG. 33 is a schematic block diagram of a second communication device according to another embodiment of the present disclosure.
FIG. 34 is a schematic block diagram of a communication device according to an embodiment of the present disclosure.
FIG. 35 is a schematic block diagram of a chip according to an embodiment of the present disclosure.
FIG. 36 is a schematic block diagram of a communication system according to an embodiment of the present disclosure.

### DETAILED DESCRIPTION

Hereinafter, technical solutions in the embodiments of the present disclosure are described with reference to the accompanying drawings in the embodiments of the present disclosure.

The technical solutions in the embodiments of the present disclosure may be applied to various communication systems, such as: a Long Term Evolution (LTE) system, an advanced LTE (LTE-A) system, a NR system, an evolution system of the NR system, an LTE-based access to unlicensed spectrum (LTE-U) system, an NR-based access to unlicensed spectrum (NR-U) system, a Non-Terrestrial Network (NTN) system, a Universal Mobile Telecommunication System (UMTS), a Wireless Local Area Network (WLAN), a Wireless Fidelity (WiFi), a 5G system or other communication systems.

Generally, the number of connections supported by a traditional communication system is limited and the connections are easy to be implemented. However, with the development of the communication technology, a mobile communication system will not only support traditional communications, but also support, for example, a Device to Device (D2D) communication, a Machine to Machine (M2M) communication, a Machine Type Communication (MTC), a Vehicle to Vehicle (V2V) communication, or a Vehicle to Everything (V2X) communication, etc. The embodiments of the present disclosure may also be applied to these communication systems.

In an implementation, the communication system in the embodiments of the present disclosure may be applied to a Carrier Aggregation (CA) scenario, a Dual Connectivity (DC) scenario, and may also be applied to a Standalone (SA) network deployment scenario.

In an implementation, the communication system in the embodiments of the present disclosure may be applied to an unlicensed spectrum. The unlicensed spectrum may also be considered to be a shared spectrum. Alternatively, the communication system in the embodiments of the present disclosure may also be applied to a licensed spectrum. The licensed spectrum may also be considered to be an unshared spectrum.

The embodiments of the present disclosure are described in connection with a network device and a terminal device. The terminal device may also be referred to as User Equipment (UE), an access terminal, a user unit, a user station, a mobile station, a mobile platform, a remote station, a remote terminal, a mobile device, a user terminal, a terminal, a wireless communication device, a user agent or a user device, etc.

The terminal device may be a Station (STA) in the WLAN, a cellular telephone, a cordless telephone, a Session Initiation Protocol (SIP) telephone, a Wireless Local Loop (WLL) station, a Personal Digital Assistant (PDA) device, a handheld device having a wireless communication function, a computing device or other processing device connected to a wireless modem, a vehicle-mounted device, a wearable device, a terminal device in a next generation communication system such as an NR network, or a terminal device in a future evolved public land mobile network (PLMN), etc.

In the embodiments of the present disclosure, the terminal device may be deployed on land, including indoors or outdoors, as hand-held, wearable or vehicle-mounted devices; or may be deployed on the water (such as on ships); or may be deployed in the air (such as on airplanes, balloons and satellites).

In the embodiments of the present disclosure, the terminal device may be a mobile phone, a tablet computer (pad), a computer with a wireless transceiver function, a Virtual Reality (VR) terminal device, an Augmented Reality (AR) terminal device, a wireless terminal device in an industrial control, a wireless terminal device in a self driving, a wireless terminal device in a remote medical, a wireless terminal device in a smart grid, a wireless terminal device in a transportation safety, a wireless terminal device in a smart city, or a wireless terminal device in a smart home, etc.

By way of example but not limitation, in the embodiments of the present disclosure, the terminal device may also be a wearable device. The wearable device may also be referred to as a wearable smart device, which is a general term of wearable devices that are intelligently designed and developed by applying wearable technology to daily wear, such as, glasses, gloves, watches, clothing and shoes. The wearable device is a portable device that is worn directly on the body or integrated into the user's clothes or accessories. The wearable device is not only a kind of hardware device, but also realizes functions through software support, data interaction and cloud interaction. The generalized wearable smart device has full functions and a large size, and the generalized wearable smart device may realize complete or partial functions without relying on smart phones, such as smart watches or smart glasses, and the generalized wearable smart device only focus on certain application functions and need to be used in conjunction with other devices (such as, smart phones), such as, various smart bracelets and smart jewelry for monitoring physical signs.

In the embodiments of the present disclosure, the network device may be a device configured to communicate with the mobile device, and the network device may be an Access Point (AP) in the WLAN, an Evolutional Node B (eNB, or eNodeB) in the LTE, or a relay station or access point, or a vehicle-mounted device, a wearable device, a network device (gNB) in the NR network, a network device in a future evolved PLMN network, or a network device in an NTN network, or the like.

By way of example and not limitation, in the embodiments of the present disclosure, the network device may have mobility characteristics, for example, the network device may be a mobile device. Optionally, the network device may be a satellite, a balloon station, and the like. For example, the satellite may be a Low Earth Orbit (LEO) satellite, a Medium Earth Orbit (MEO) satellite, a Geostationary Earth Orbit (GEO) satellite, a High Elliptical Orbit (HEO) satellite, and the like. Optionally, the network device may also be a base station located on land, water, etc.

In the embodiments of the present disclosure, the network device may provide services for a cell, and the terminal device communicates with the network device via transmission resources (e.g., frequency-domain resources, or spectrum resources) used by the cell. The cell may be a cell corresponding to the network device (e.g., the base station), and the cell may belong to a macro base station or a base station corresponding to a small cell. The small cell may include a metro cell, a micro cell, a pico cell, a femto cell, etc. These small cells have characteristics of small coverage and low transmission power, and are suitable for providing high-speed data transmission services.

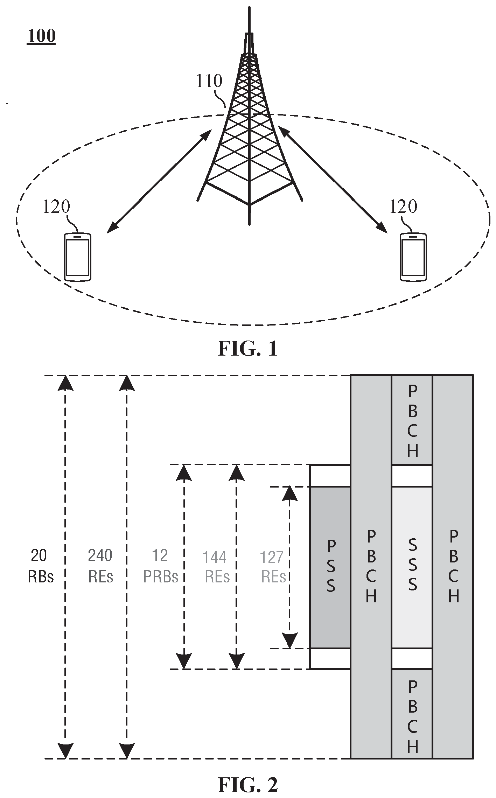

FIG. 1 exemplarily illustrates a communication system 100. The communication system includes one network device 110 and two terminal devices 120. In an implementation, the communication system 100 may include multiple network devices 110, and another number of terminal devices 120 may be included in the coverage of each network device 110, which is not limited in the embodiments of the present disclosure.

In an implementation, the communication system 100 may further include other network entities, such as, a Mobility Management Entity (MME), an Access and Mobility Management Function (AMF), and the like, which is not limited in the embodiments of the present disclosure.

Herein, the network device may further include an access network device and a core network device. That is, the wireless communication system further includes multiple core networks for communicating with the access network device. The access network device may be an evolutional node B (eNB or e-NodeB), macro base station, a micro base station (also referred to as a "small base station"), a pico base station, an AP, a transmission point (TP) or a new generation Node B (gNodeB), or the like in the LTE system, the NR system or an Authorized Auxiliary Access Long-Term Evolution (LAA-LTE) system.

It is to be understood that a device having a communication function in the network/system in the embodiments of the present disclosure may be referred to as a communication device. Taking the communication system illustrated in FIG. 1 as an example, the communication device may include a network device and a terminal device having a communication function, and the network device and the terminal device may be specific devices in the embodiments of the present disclosure, and will not be described herein. The communication device may also include other devices in the communication system, such as other network entities such as a network controller and a mobility management entity, which is not limited in the embodiments of the present disclosure.

It is to be understood that the terms "system" and "network" are often used interchangeably herein. Herein, the term "and/or" in the present disclosure is only an association relationship describing associated objects and represents that three relationships may exist. For example, A and/or B may represent three conditions: i.e., independent existence of A, existence of both A and B and independent existence of B. In addition, the character "/" in the present disclosure generally indicates that the relationship between the related objects is "or".

It is to be understood that the "indication" mentioned in the embodiments of the present disclosure may be a direct indication, may be an indirect indication, or may be indicative of an association. For example, A indicates B, which may mean that A directly indicates B, for example, B may be obtained through A; it may also mean that A indirectly indicates B, for example, A indicates C, and B may be obtained by C; and it may also indicate that there is an association between A and B.

In the description of the embodiments of the present disclosure, the term "correspond" may mean that there is a direct correspondence or an indirect correspondence between the two, may also mean that there is an association relationship between the two, and may also be a relationship between indication and being indicated, configuration and being configured, etc.

In order to facilitate understanding of the technical solutions of the embodiments of the present disclosure, related technologies of the embodiments of the present disclosure are described below. The following related technologies used as optional solutions may be combined with technical solution of the embodiments of the present disclosure in various ways, and the combinations belong to the scope of protection of the embodiments of the present disclosure.

First, a synchronization signal in the 5th-Generation Mobile Communication Technology (5G) NR.

The SSB in the 5G NR design may include a PSS, an SSS, a PBCH, and a reference signal DMRS of the PBCH. Herein, the PSS and the SSS are used for carrying a cell Identifier (ID) (and may carry 1008 cell IDs), completing time-frequency synchronization, and acquiring timing information. The PSS, SSS and reference signal DMRS of the PBCH may be used for measurement of signal strength/signal quality of a cell or a beam. The PBCH may carry information of a beam and a cell. Overall, the structure of the 5G NR SSB is illustrated in FIG. 2. The SSB is composed of the PSS, the SSS and the PBCH. The SSB occupies 4 symbols in the time domain, the PSS is located in the first symbol of the SSB, the SSS is located in the third symbol of the SSB, the PBCH is located in the second symbol, the fourth symbol, and a part of the third symbol of the SSB. The SSB has a span of 20 Resource Blocks (RBs) in the frequency domain. It is to be noted herein that in the SSB design of the 5G NR, each of the aforementioned PSS, SSS, PBCH and the DMRS of the PBCH occupies independent time-frequency resources.

Second, artificial intelligence.

In recent years, the artificial intelligence research represented by the neural network has made great achievements in many fields, and it will also play an important role in people's production and life for a long time to come.

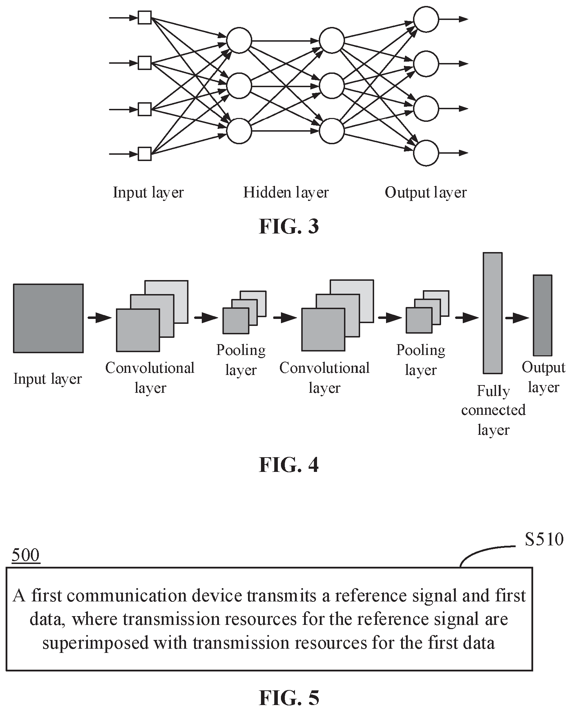

The basic structure of a simple neural network includes: an input layer, hidden layers and an output layer, as shown in FIG. 3. The input layer is responsible for receiving data, the hidden layers process the data, and the final result is generated at the output layer. Herein, one node represents one processing unit, and can be considered as a simulated neuron. Multiple neurons form one layer of the neural network, and information transfer and processing between multiple layers construct an overall neural network.

With the continuous development of the neural network research, neural network deep learning algorithms are proposed in recent years, and more hidden layers are introduced. Feature learning is performed through layer-by-layer training of the neural network with multiple hidden layers, the learning and processing capabilities of the neural network are greatly improved, and the neural network is widely used in pattern recognition, signal processing, optimization combination, anomaly detection, etc.

Similarly, with the development of the deep learning, the convolutional neural network is further researched. In one convolutional neural network, its basic structure includes: an input layer, multiple convolutional layers, multiple pooling layers, fully connected layer and an output layer, as shown in FIG. 4. The introduction of the convolutional layers and pooling layers effectively controls the dramatic increase of network parameters, limits the number of parameters, mines the characteristics of local structure, which improves the robustness of the algorithm.

The problems existing in the usage of the SSB (including the synchronization signal, the broadcast message, and the DMRS of the broadcast message) involve the following three aspects.
(1) Within the SSB, the detection accuracy of synchronization sequences, such as the PSS and the SSS, is required to be improved, especially the single detection accuracy. The guarantee and improvement of the detection accuracy of the synchronization signal can effectively ensure the normal execution of functions such as cell discovery, synchronization, and access. However, if the aforementioned functions are completed by increasing the overhead of the SSB resources, such as more time-domain resources, frequency-domain resources, and longer synchronization sequences, the SSB that originally occupies a large amount of independent transmission resources will need more resource overhead. The solution in the embodiments of the present disclosure considers the introduction and capability improvement of an Artificial Intelligence/Machine Learning (AI/ML) receiver, and deals with the aforementioned problem through the matching design of the SSB. For example, the required sequence time-frequency resources are shortened but the normal execution of the aforementioned functions of the cell discovery, synchronization, and access are ensured, and the independent occupation of a large number of resources is avoided.
(2) Within the SSB, a PBCH part is included currently, and is mainly used for carrying cell broadcast information. Among the time-frequency resources occupied by the current PBCH, after the time-frequency resources occupied by the DMRS inside the PBCH (demodulation reference signal of the PBCH) are excluded, resources available for carrying the PBCH content are also limited. The problem such as the limited carrying resources of the PBCH is also a problem required to be solved in the future communication system design. After the introduction of the AI/ML receiver is considered, the solution in the embodiments of the present disclosure may provide a solution considering that the cell information carried on the PBCH and the cell synchronization signal (the reference signal) share resources. The resource sharing solution proposed in the embodiments of the present disclosure can increase the available resources for the PBCH without causing excessive system resource overhead.
(3) Considering that since the SSB is associated with the beam, with the increase of frequency and the addition of the beams, the number of SSBs required to be transmitted in one SSB transmission period will also increase. For example, at present, a maximum of 8 SSBs are required in the low-frequency design and a maximum of 64 SSBs are required in the highfrequency design, so as to meet the coverage and access requirements of the cell through beam scanning. However, with the commercialization of the 5G, the preparation of the 6G, and the evolution of subsequent wireless systems, there is bound to be a requirement for the transmission of the cell synchronization signal at the higher frequency. Continuing with the current SSB design manner will lead to an increased requirements for SSB beam scanning. That is to say, the SSB resource overhead in one SSB transmission period will be a problem required to be solved in the future communication system design. If the utilization rate of the limited transmission resources in a single SSB, or between cell synchronization signal and cell broadcast signal involved in the initial access procedure is not high, the overhead related to synchronization signals (the reference signals) and broadcast messages involved in the whole cell access will be extremely large.

In summary, the communication method provided by the embodiments of the present disclosure includes a method for designing a 6th-Generation Mobile Communication Technology (6G) synchronization signal, and by designing a resource sharing solution considering the utilization of a reception solution and detection solution represented by the AI/ML receiver, it is possible to obtain beneficial effects on issues such as resource overhead required for 6G synchronization, cell information content bearing, and the like.

FIG. 5 is a schematic flowchart of a communication method 500 according to an embodiment of the present disclosure. This method is optionally applied to, but is not limited to, the system shown in FIG. 1. The method includes at least some of the following content.

In operation S510, a first communication device performs transmission of a reference signal and first data, where transmission resources for the reference signal are superimposed with transmission resources for the first data.

In the embodiments of the present disclosure, the first communication device may send the reference signal and the first data to the second communication device through the superimposed transmission resources. The first communication device may be a network device, such as the base station, and the second communication device may be a terminal device, such as the UE. The network device may perform the superimposed transmission of the reference signal and the first data to the terminal device. In one case, the network device may send notification information to the terminal device to notify the terminal device of a type of the superimposed transmission of the reference signal and the first data that is supported by the network device, and the like. In another case, the terminal device may send notification information to the network device to notify the network device of a type of the superimposed transmission of the reference signal and the first data that is supported by the terminal device, and the like. The first communication device may be a terminal device such as UE1, and the second communication device may be another terminal device such as UE2. One terminal device may perform the superimposed transmission of the reference signal and the first data to another terminal device through the sidelink. For example, the UE1 may send the notification information to the UE2 to notify the UE2 of the type of the superimposed transmission of the reference signal and the first data that is supported by the UE1, and the like. The UE 2 may send the notification information to the UE1 to notify the UE1 of the type of the superimposed transmission of the reference signal and the first data that is supported by the UE2, and the like.

In an implementation, the reference signal may include one or more of: a synchronization signal, a primary synchronization signal, and a secondary synchronization signal.

In an implementation, the first data includes a broadcast message. The broadcast message may also be called as broadcast information or broadcast data. For example, the first data includes cell broadcast data. The cell broadcast data may also be called as a cell broadcast message, cell broadcast information, a cell broadcast signal, or the like.

In an implementation, the cell broadcast data includes at least one of: cell information, Master Information Block (MIB) information, and System Information Block (SIB) information that are carried on the PBCH channel. The SIB information may include SIB 1 information, SIB2 information, SIB3 information, SIB4 information, SIBx information, and the like.

According to the embodiments of the present disclosure, by the superimposed transmission of the reference signal and the first data, the resource overhead occupied by the transmission can be reduced as compared with the case that the transmission of the signal and the transmission of the first data independently occupy different time-frequency resources.

In an implementation, the transmission resources for the reference signal are completely or partially superimposed with the transmission resources for the first data.

In an implementation, the transmission resources include time-domain resources and/or frequency-domain resources. The time-domain resources include symbols, and the frequency-domain resource includes carriers.

In an implementation, the reference signal and the first data occupy, on different symbols, completely same, partially same or different carriers. For example, the time-domain resources for the reference signal occupy a symbol 1, a symbol 2 and a symbol 3, and the first data occupies 24 identical carriers on each of the symbol 1, the symbol 2, and the symbol 3. For another example, the time-domain resources for the reference signal occupy the symbol 1, the symbol 2 and the symbol 3, and the first data occupies 12 carriers on the symbol 1, and occupies 24 carriers including the 12 carriers on each of the symbol 2 and the symbol 3. For another example, the time-domain resources for the reference signal occupy the symbol 1, the symbol 2 and the symbol 3, and the first data occupies Carrier (C) 1 to C6 on the symbol 1 and occupies carrier 8 to C12 on the symbol 2.

In an implementation, time-domain resources and/or frequency-domain resources for the reference signal are completely superimposed with time-domain resources and/or frequency-domain resources for the first data. For example, the time-domain resources for the reference signal and the time-domain resources for the first data both occupy the symbol 1, the symbol 2, and the symbol 3. The frequency-domain resources for the reference signal and the frequency-domain resources for the first data both occupy the carrier 1 and the carrier 2.

In an implementation, time-domain resources and/or frequency-domain resources for the reference signal are partially superimposed with time-domain resources and/or frequency-domain resources for the first data. In the embodiments of the present disclosure, the transmission of the reference signal may not occupy independent time-frequency resources, but may share resources with transmission of other signals and information. Therefore, the addition of more time-domain symbols of the reference signals (e.g., the synchronization signal) will not bring additional resource overhead and the loss of the system throughput while improving the accuracy of cell discovery, synchronization, measurement, and the like. For example, the time-domain resources for the reference signal occupy the symbol 1, the symbol 2, and the symbol 3, and the time-domain resources for the first data occupy the symbol 1. The frequency-domain resources for the reference signal occupy the carrier 1 and the carrier 2, and the frequency-domain resources for the first data occupy the carrier 2.

In an implementation, time-domain resources for the reference signal are completely superimposed with time-domain resources for the first data, and frequency-domain resources for the reference signal are partially superimposed with frequency-domain resources for the first data. For example, the time-domain resources for the reference signal and the time-domain resources for the first data both occupy the symbol 1, the symbol 2, and the symbol 3. The frequency-domain resources for the reference signal occupy the carrier 1 and the carrier 2, and the frequency-domain resources for the first data occupy the carrier 2.

In an implementation, frequency-domain resources for the reference signal are completely superimposed with frequency-domain resources for the first data, and time-domain resources for the reference signal are partially superimposed with time-domain resources for the first data. In the embodiments of the present disclosure, the transmission of the reference signal may not occupy independent time-frequency resources, but may share resources with transmission of other signal and information. Therefore, the addition of more time-domain symbols of the reference signal (e.g., the synchronization signal) will not bring additional resource overhead and the loss of the system throughput while improving the accuracy of the cell discovery, synchronization, measurement, and the like. For example, the time-domain resources for the reference signal occupy the symbol 1, the symbol 2, and the symbol 3, and the time-domain resources for the first data occupy the symbol 1. The frequency-domain resources for the reference signal occupy the carrier 1 and the carrier 2, and the frequency-domain resources for the first data occupy the carrier 2. For example, the time-domain resources for the reference signal occupy the symbol 1, the symbol 2, and the symbol 3, and the time-domain resources for the first data occupy the symbol 1. The frequency-domain resources for the reference signal and the frequency-domain resources for the first data both occupy carrier 1 and carrier 2.

In an implementation, the reference signal includes a first reference signal, and the first reference signal and the first data occupy completely or partially same time-domain resources and/or frequency-domain resources. It ensures that the transmission of the reference signal (e.g., the synchronization signal) does not occupy the independent frequency-domain resources, but can share resources with transmission of other signals and information, which will not bring additional resource overhead and the loss of the system throughput. For example, the first reference signal and the first data occupy completely same time-domain resources. For another example, the first reference signal and the first data occupy partially same time-domain resources. For another example, the first reference signal and the first data occupy completely same frequency-domain resources. For another example, the first reference signal and the first data occupy partially same frequency-domain resources. For another example, the first reference signal and the first data occupy completely same time-domain resources and frequency-domain resources. For another example, the first reference signal and the first data occupy partially same time-domain resources and frequency-domain resources. For another example, the first reference signal and the first data occupy completely same time-domain resources and partially same frequency-domain resources. For another example, the first reference signal and the first data occupy partially same time-domain resources and completely same frequency-domain resources.

In an implementation, the reference signal includes a second reference signal and a third reference signal. The second reference signal and the first data occupy completely or partially same time-domain resources and/or frequency-domain resources, and the third reference signal and the first data occupy completely or partially same time-domain resources and/or frequency-domain resources. For example, the second reference signal and the first data occupy completely same time-domain resources and/or frequency-domain resources, and the third reference signal and the first data occupy completely same time-domain resources and/or frequency-domain resources. For example, the second reference signal and the first data occupy completely same time-domain resources and/or frequency-domain resources, and the third reference signal and the first data occupy partially same time-domain resources and/or frequency-domain resources. For another example, the second reference signal and the first data occupy partially same time-domain resources and/or frequency-domain resources, and the third reference signal and the first data occupy completely same time-domain resources and/or frequency-domain resources.

In an implementation, the second reference signal and the third reference signal occupy different time-domain resources, the second reference signal and a first part of the first data occupy completely or partially same time-domain resources and/or frequency-domain resources, and the third reference signal and a second part of the first data occupy completely or partially same time-domain resources and/or frequency-domain resources. The first part of the first data and the second part of the first data may jointly form the first data, or may account for a certain proportion of the first data. For example, the second reference signal and the third reference signal occupy different time-domain resources, the second reference signal and the first part of the first data occupy completely same time-domain resources and frequency-domain resources, and the third reference signal and the second part of the first data occupy completely same time-domain resources and frequency-domain resources. For another example, the second reference signal and the third reference signal occupy different time-domain resources, the second reference signal and the first part of the first data occupy partially same time-domain resources and completely same frequency-domain resources, and the third reference signal and the second part of the first data occupy completely same time-domain resources and frequency-domain resources. For another example, the second reference signal and the third reference signal occupy different time-domain resources, the second reference signal and the first part of the first data occupy completely same time-domain resources and frequency-domain resources, and the third reference signal and the second part of the first data occupy partially same time-domain resources and completely same frequency-domain resources. For another example, the second reference signal and the third reference signal occupy different time-domain resources, the second reference signal and the first part of the first data occupy partially same time-domain resources and frequency-domain resources, and the third reference signal and the second part of the first data occupy partially same time-domain resources and frequency-domain resources.

In an implementation, the second reference signal and the third reference signal occupy different frequency-domain resources, the second reference signal and a third part of the first data occupy completely or partially same time-domain resources and/or frequency-domain resources, and the third reference signal and a fourth part of the first data occupy completely or partially same time-domain resources and/or frequency-domain resources. The third part of the first data and the fourth part of the first data may jointly form the first data, or may account for a certain proportion of the first data. For example, the second reference signal and the third reference signal occupy different frequency-domain resources, the second reference signal and the third part of the first data occupy completely same time-domain resources and frequency-domain resources, and the third reference signal and the fourth part of the first data occupy completely same time-domain resources and frequency-domain resources. For another example, the second reference signal and the third reference signal occupy different frequency-domain resources, the second reference signal and the third part of the first data occupy partially same time-domain resources and completely same frequency-domain resources, and the third reference signal and the fourth part of the first data occupy completely same time-domain resources and frequency-domain resources. For another example, the second reference signal and the third reference signal occupy different frequency-domain resources, the second reference signal and the third part of the first data occupy completely same time-domain resources and frequency-domain resources, and the third reference signal and the fourth part of the first data occupy partially same time-domain resources and completely same frequency-domain resources. For another example, the second reference signal and the third reference signal occupy different frequency-domain resources, the second reference signal and the third part of the first data occupy partially same time-domain resources and frequency-domain resources, and the third reference signal and the fourth part of the first data occupy partially same time-domain resources and frequency-domain resources.

In an implementation, the reference signal includes a first reference signal and a fourth reference signal. The first reference signal, the fourth reference signal and the first data occupy completely or partially same time-domain resources and/or frequency-domain resources. For example, the first reference signal, the fourth reference signal and the first data occupy completely same time-domain resources. For another example, the first reference signal, the fourth reference signal and the first data occupy completely same frequency-domain resources. For another example, the first reference signal, the fourth reference signal and the first data occupy partially same time-domain resources. For another example, the first reference signal, the fourth reference signal and the first data occupy partially same frequency-domain resources. For another example, the first reference signal, the fourth reference signal and the first data occupy completely same time-domain resources and partially same frequency-domain resources. For another example, the first reference signal, the fourth reference signal and the first data occupy partially same time-domain resources and completely same frequency-domain resources.

In an implementation, the reference signal includes a second reference signal, a third reference signal and a fourth reference signal. The second reference signal, the third reference signal, the fourth reference signal and the first data occupy completely or partially same time-domain resources and/or frequency-domain resources. For example, the second reference signal, the third reference signal, the fourth reference signal and the first data occupy completely same time-domain resources. For another example, the second reference signal, the third reference signal, the fourth reference signal and the first data occupy completely same frequency-domain resources. For another example, the second reference signal, the third reference signal, the fourth reference signal and the first data occupy partially same time-domain resources. For another example, the second reference signal, the third reference signal, the fourth reference signal and the first data occupy partially same frequency-domain resources. For another example, the second reference signal, the third reference signal, the fourth reference signal and the first data occupy completely same time-domain resources and partially same frequency-domain resources. For another example, the second reference signal, the third reference signal, the fourth reference signal and the first data occupy partially same time-domain resources and completely same frequency-domain resources.

In an implementation, the reference signal includes a fourth reference signal. The fourth reference signal and the first data occupy completely or partially same time-domain resources and/or frequency-domain resources. For example, the fourth reference signal and the first data occupy completely same time-domain resources. For another example, the fourth reference signal and the first data occupy partially same time-domain resources. For another example, the fourth reference signal and the first data occupy completely same frequency-domain resources. For another example, the fourth reference signal and the first data occupy partially same frequency-domain resources. For another example, the fourth reference signal and the first data occupy completely same time-domain resources and frequency-domain resources. For another example, the fourth reference signal and the first data occupy partially same time-domain resources and frequency-domain resources. For another example, the fourth reference signal and the first data occupy completely same time-domain resources and partially same frequency-domain resources. For another example, the fourth reference signal and the first data occupy partially same time-domain resources and completely same frequency-domain resources.

In an implementation, the first reference signal is a synchronization signal. In the embodiments of the present disclosure, the transmission resources for the synchronization signal may be partially or completely superimposed with the transmission resources for the first data.

In an implementation, the second reference signal is the primary synchronization signal, and the third reference signal is the secondary synchronization signal. In the embodiments of the present disclosure, the transmission resources for the primary synchronization signal, the transmission resources for the secondary synchronization signal, and the transmission resources for the first data may be partially or completely superimposed.

In an implementation, the fourth reference signal is the demodulation reference signal. In the embodiments of the present disclosure, the transmission resources for the demodulation reference signal may be partially or completely superimposed with the transmission resources for the first data. The transmission resources for the primary synchronization signal, the transmission resources for the secondary synchronization signal, the transmission resources for the demodulation reference signal and the transmission resources for the first data may be partially or completely superimposed.

In an implementation, on one or more resource subsets within a resource range occupied by one reference signal, superimposed transmission of another reference signal and/or the first data is performed. In the embodiments of the present disclosure, the resource range occupied by the reference signal may include a time-domain range and/or a frequency-domain range. The resource subsets may include time-domain resource subsets and/or frequency-domain resource subsets. For example, one reference signal R1 occupies a time-domain range from the symbol 1 to the symbol 6, and a frequency-domain range from the carrier 1 to the carrier 3. One resource subset includes 2 symbols and 1 carrier. The transmission of another reference signal R2 is performed on a first resource subset, and the first resource subset occupies the time-domain resources of the symbol 1 and the symbol 2, and the frequency-domain resource of the carrier 1. The transmission of the first data is performed on a second resource subset, and the second resource subset occupies the time-domain resources of the symbol 3 and the symbol 4, and the frequency-domain resource of the carrier 1.

In an implementation, among Resource Elements (REs) where the reference signal is superimposed with the first data, RE(s) for non-superimposed transmission of a measurement reference signal, a synchronization signal or a DMRS is reserved and/or configured. For example, the superimposed transmission resources for the reference signal and the first data include the symbol 1 to the symbol 10, and the carrier 1 to the carrier 12. Among the superimposed transmission resources, some REs may be reserved and/or configured to be used as the non-superimposed transmission resources. For example, an RE constituted by the symbol 2 and the carrier 3 and an RE constituted by the symbol 3 and the carrier 4 are the non-superimposed transmission resources. Only the transmission of one signal may be performed on the non-superimposed transmission resources.

In an implementation, on one or more resource subsets within a resource range occupied by one piece of the first data, superimposed transmission of one or more reference signals is performed. For example, the resource range occupied by the first data includes the symbol 1 to the symbol 20, and the carrier 1 to the carrier 24. One resource subset includes 1 symbol and 2 carriers. The transmission of another reference signal R1 is performed on a first resource subset, and the first resource subset occupies the time-domain resource of the symbol 1, and the frequency-domain resources of the carrier 1 and carrier 2. The transmission of the reference signal R2 is performed on a second resource subset, and the second resource subset occupies the time-domain resource of the symbol 3, and the frequency-domain resources of the carrier 1 and carrier 2.

In an implementation, the resource subsets where the reference signal is superimposed with the first data are RE subsets, or resource subsets where only transmission of the first data is performed within the reference signal. For example, within the resource range occupied by the first data, one resource subset includes one RE, and one RE includes one symbol and one carrier. The transmission of the reference signal R1 is performed on the first resource subset {RE1, RE2, RE3}. The RE1 occupies the time-domain resource of the symbol 1 and the frequency-domain resource of the carrier 1. The RE2 occupies the time-domain resource of the symbol 2 and the frequency-domain resource of the carrier 2. The RE3 occupies the time-domain resource of the symbol 3 and the frequency-domain resource of the carrier 3. For another example, within the resource range occupied by the first data, there is a resource subset, e.g., {RE4, RE5}, used for only the transmission of the first data and not used for the transmission of the reference signal. The RE4 occupies the time-domain resource of the symbol 1 and the frequency-domain resource of the carrier 2. The RE5 occupies the time-domain resource of the symbol 2 and the frequency-domain resource of the carrier 3.

In an implementation, the one or more resource subsets include at least one of: subset(s) in a time domain, subset(s) in a frequency domain, consecutive subset(s), and non-consecutive subset(s). For example, one resource subset includes a consecutive symbol subset {symbol 1, symbol 2, symbol 3} in the time domain. For another example, one resource subset includes a non-consecutive symbol subset {symbol 1, symbol 3, symbol 5} in the time domain. For another example, one resource subset includes a consecutive carrier subset {carrier 1, carrier 2, ..., carrier 12} in the frequency domain. For another example, one resource subset includes a non-consecutive carrier subset {carrier 1, carrier 2, carrier 5, carrier 6, carrier 9, carrier 10} in the frequency domain.

In an implementation, transmission of the reference signal and transmission of the first data are consecutive or non-consecutive on time-domain resources and/or frequency-domain resources. For example, the transmission of the reference signal and the transmission of the first data are consecutive on the time-domain resources. For another example, the transmission of the reference signal and the transmission of the first data are consecutive on the frequency-domain resources. For another example, the transmission of the reference signal and the transmission of the first data are non-consecutive on the time-domain resources. For another example, the transmission of the reference signal and the transmission of the first data are non-consecutive on the frequency-domain resources. For another example, the transmission of the reference signal and the transmission of the first data are consecutive on the time-domain resources and non-consecutive on the frequency-domain resources. For another example, the transmission of the reference signal and the transmission of the first data are non-consecutive on the time-domain resources and consecutive on the frequency-domain resources. For another example, the transmission of the reference signal and the transmission of the first data are consecutive both on the time-domain resources and the frequency-domain resources. For another example, the transmission of the reference signal and the transmission of the first data are non-consecutive both on the time-domain resources and the frequency-domain resources.

In an implementation, each of a proportion of a transmission power occupied by the reference signal and a proportion of a transmission power occupied by the first data is a specific proportion. For example, the reference signal accounts for 10% of the total transmission power, and the first data accounts for 90% of the total transmission power. The total transmission power may be a transmission power corresponding to one or more REs, a transmission power corresponding to one or more symbols, or a transmission power corresponding to one or more carriers.

In an implementation, the transmission power occupied by the reference signal and the transmission power occupied by the first data on one RE are limited based on a power proportion.

In an implementation, the transmission power occupied by the reference signal on REs in the transmission resources is a first proportion of a total power of the REs in the transmission resources. In the embodiments of the present disclosure, the first proportion corresponding to the reference signal may be the same as or different from the first proportion corresponding to the first data. The different reference signals may correspond to the same first proportion or different first proportions. For example, the transmission power of the second reference signal accounts for 10% of the total transmission power of one RE, the transmission power of the third reference signal accounts for 20% of the total transmission power of one RE, and the first data accounts for 70% of the total transmission power. For another example, the transmission power of the first reference signal accounts for 10% of the total transmission power of one RE, the transmission power of the fourth reference signal accounts for 10% of the total transmission power of one RE, and the first data accounts for 80% of the total transmission power.

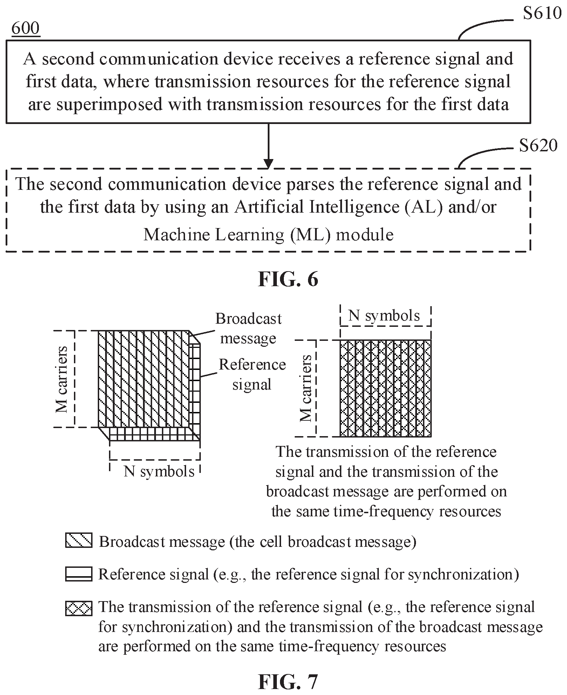

FIG. 6 is a schematic flowchart of a communication method 600 according to an embodiment of the present disclosure. This method is optionally applied to, but is not limited to, the system shown in FIG. 1. The method includes at least some of the following content.

In operation S610, a second communication device receives a reference signal and first data, where transmission resources for the reference signal are superimposed with transmission resources for the first data. In the embodiments of the present disclosure, the second communication device may receive the reference signal and the first data from the first communication device through reception resources. The reception resources for the reference signal and the first data may be the same as the transmission resources for the reference signal and the first data.

In an implementation, the method further includes operation S620.

In operation S620, the second communication device parses the reference signal and the first data by using an AL and/or ML module.

In an implementation, the transmission resources for the reference signal are completely or partially superimposed with the transmission resources for the first data.

In an implementation, time-domain resources and/or frequency-domain resources for the reference signal are completely superimposed with time-domain resources and/or frequency-domain resources for the first data.

In an implementation, time-domain resources and/or frequency-domain resources for the reference signal are partially superimposed with time-domain resources and/or frequency-domain resources for the first data.

In an implementation, time-domain resources for the reference signal are completely superimposed with time-domain resources for the first data, and frequency-domain resources for the reference signal are partially superimposed with frequency-domain resources for the first data.

In an implementation, frequency-domain resources for the reference signal are completely superimposed with frequency-domain resources for the first data, and time-domain resources for the reference signal are partially superimposed with time-domain resources for the first data.

In an implementation, the reference signal includes a first reference signal, and the first reference signal and the first data occupy completely or partially same time-domain resources and/or frequency-domain resources.

In an implementation, the reference signal includes a second reference signal and a third reference signal. The second reference signal and the first data occupy completely or partially same time-domain resources and/or frequency-domain resources, and the third reference signal and the first data occupy completely or partially same time-domain resources and/or frequency-domain resources.

In an implementation, the second reference signal and the third reference signal occupy different time-domain resources, the second reference signal and a first part of the first data occupy completely or partially same time-domain resources and/or frequency-domain resources, and the third reference signal and a second part of the first data occupy completely or partially same time-domain resources and/or frequency-domain resources.

In an implementation, the second reference signal and the third reference signal occupy different frequency-domain resources, the second reference signal and a third part of the first data occupy completely or partially same time-domain resources and/or frequency-domain resources, and the third reference signal and a fourth part of the first data occupy completely or partially same time-domain resources and/or frequency-domain resources.

In an implementation, the reference signal includes a first reference signal and a fourth reference signal. The first reference signal, the fourth reference signal and the first data occupy completely or partially same time-domain resources and/or frequency-domain resources.

In an implementation, the reference signal includes a second reference signal, a third reference signal and a fourth reference signal. The second reference signal, the third reference signal, the fourth reference signal and the first data occupy completely or partially same time-domain resources and/or frequency-domain resources.

In an implementation, the reference signal includes a fourth reference signal. The fourth reference signal and the first data occupy completely or partially same time-domain resources and/or frequency-domain resources.

In an implementation, the first reference signal is a synchronization signal.

In an implementation, the second reference signal is the primary synchronization signal, and the third reference signal is the secondary synchronization signal.

In an implementation, the fourth reference signal is the demodulation reference signal.

In an implementation, on one or more resource subsets within a resource range occupied by one reference signal, superimposed transmission of another reference signal and/or the first data is performed.

In an implementation, among REs where the reference signal is superimposed with the first data, RE(s) for non-superimposed transmission of a measurement reference signal, a synchronization signal or a DMRS is reserved and/or configured.

In an implementation, on one or more resource subsets within a resource range occupied by one piece of the first data, superimposed transmission of one or more reference signals is performed.

In an implementation, the resource subsets where the reference signal is superimposed with the first data are RE subsets, or resource subsets where only transmission of the first data is performed within the reference signal.

In an implementation, the one or more resource subsets include at least one of: subsets in a time domain, subsets in a frequency domain, consecutive subsets, and non-consecutive subsets.

In an implementation, the reference signal and the first data occupy, on different symbols, completely same, partially same or different carriers.

In an implementation, the first data includes cell broadcast data.

In an implementation, the cell broadcast data includes at least one of: cell information, MIB information, and SIB information that are carried on a PBCH channel.

In an implementation, transmission of the reference signal and transmission of the first data are consecutive or non-consecutive on time-domain resources and/or frequency-domain resources.

In an implementation, each of a proportion of a transmission power occupied by the reference signal and a proportion of a transmission power occupied by the first data is a specific proportion.

In an implementation, the transmission power occupied by the reference signal and the transmission power occupied by the first data on one RE are limited based on a power proportion.

In an implementation, the transmission power occupied by the reference signal on REs in the transmission resources is a first proportion of a total power of the REs in the transmission resources.

The specific examples of the second communication device performing the method 600 in the embodiment may refer to the description related to the second communication device in the aforementioned method 500. For brevity, details are not elaborated herein again.

At the beginning of the 5G standardization discussion, the term Synchronization Signal Block (SSB) was adopted. Since the SSB also includes the PBCH channel (including the broadcast message carried on the PBCH and the DMRS signal of the PBCH), in the later writing process of the specification, for the sake of accuracy, the SSB is renamed as Synchronization Signal Block/PBCH Block (SS/PBCH Block). For simplicity, the SS/PBCH Block is generally referred to as the SSB. The solution of the embodiments of the present disclosure is a design for the synchronization signal and the broadcast channel, and the SSB can be used as a simple reference to the synchronization signal and/or the broadcast channel.

The reference signal described in the embodiments of the present disclosure may be the synchronization signal and/or the demodulation reference signal, and may be subdivided into one or more types of reference signals, such as, a synchronization signal, a primary synchronization signal, a secondary synchronization signal, and a demodulation reference signal. The following five examples are given.
(1) The reference signal described in the embodiments of the present disclosure may be a first reference signal, and the first reference signal is the synchronization signal.
(2) The reference signal described in the embodiments of the present disclosure may be a second reference signal and a third reference signal. The second reference signal is the primary synchronization signal, and the third reference signal is the secondary synchronization signal.
(3) The reference signal described in the embodiments of the present disclosure may be a first reference signal and a fourth reference signal. The first reference signal is the synchronization signal, and the fourth reference signal is the demodulation reference signal.
(4) The reference signal described in the embodiments of the present disclosure may be a second reference signal, a third reference signal and a fourth reference signal. The second reference signal is the primary synchronization signal, the third reference signal is the secondary synchronization signal, and the fourth reference signal is the demodulation reference signal.
(5) The reference signal described in the embodiments of the present disclosure may be a fourth reference signal, and the fourth reference signal is the demodulation reference signal.

The first data described in the embodiments of the present disclosure may be cell broadcast data, such as, MIB information, or SIB information (such as the SIB1 information, the SIB2 information, the SIB3 information, the SIB4 information, or the SIBx information).

The transmission of the reference signal (e.g., the synchronization signal) and the transmission of the first data (the cell broadcast data, e.g., cell broadcast data carried on the PBCH channel) are performed on (completely or partially) overlapped transmission resources. The base station sends them and the UE receives them.

The technical basis of the solution design in the embodiments of the present disclosure is that: after the introduction of the AI/ML receiver, it is proved through experiments that the reference signal and the first data that are transmitted in the superimposed manner can be separately parsed or jointly parsed through the AI/ML receiver. In this way, through the manner of the superimposed transmission of the reference signal and the first data, the resource exclusiveness and excessive resource overhead of different signals and data in the SSB can be avoided, and the normal execution of the functions of the cell discovery, the synchronization, the measurement, the cell information acquisition and the like involved in the SSB can be ensured.

The solution of the embodiments of the present disclosure mainly includes the following four contents.
1. The transmission of the reference signal (e.g., the synchronization signal) and the transmission of the first data (the cell broadcast data, e.g., cell broadcast data carried on the PBCH channel) may be performed on the same transmission resources. For example, on the same time-domain and/or frequency-domain resources, e.g., the superimposed transmission of the synchronization signal and the cell broadcast data on the PBCH channel is performed.
2. The manner where the transmission of the reference signal (e.g., the synchronization signal) and transmission of the first data (the cell broadcast data, e.g., cell broadcast data carried on the PBCH channel) are performed on the same transmission resources may include the completely superposed transmission or partially superposed transmission. The transmission manner includes two-layer overlapped transmission and multi-layer overlapped transmission. The specific case description will be expanded in the following examples.
3. Each of the proportion of the transmission power occupied by the reference signal and the proportion of the transmission power occupied by the first data is a specific proportion. For example, there are limitations on the transmission power of the reference signal and the transmission power of the first data on the REs, for example, being limited respectively by a power proportion. For example, the power occupied by the reference signal on the REs is a specific proportion of the total power of the REs, such as, 0.1%, 0.2%, 0.5%, 1%, 2%, 5%, 10%, 20%, 25%, 33%, 40%, 50%, 60%, 66%, 70%, 75%, 80%, 90%, 95%, or 99%.
4. The time-domain resources and frequency-domain resources involved in all examples may be consecutive resources or non-consecutive resources.

### Example 1, completely overlapped design

The superimposed transmission of the reference signal (e.g., the synchronization signal) and the first data (the cell broadcast data, e.g., the cell broadcast data carried on the PBCH channel) is performed on N symbols and M carriers, to form an SSB transmission solution and an SSB format where the superimposed transmission of the synchronization signal and the broadcast message is performed, as shown in FIG. 7.

For example, the N symbols may be one or more symbols within one slot, such as: 1 symbol, 2 symbols, 3 symbols, 4 symbols, 5 symbols, 6 symbols, 7 symbols, 8 symbols, 9 symbols, 10 symbols, 11 symbols, 12 symbols, 13 symbols, 14 symbols. The N symbols may be symbols in multiple slots, all of the symbols among multiple slots, or a part of the symbols among the multiple slots. In the solution of the example, since it technically ensures that the transmission of the reference signal (e.g., the synchronization signal) does not occupy the independent time-domain resources, but can share resources with transmission of other signals and information, the addition of more time-domain symbols of the reference signal (e.g., the synchronization signal) will not bring additional resource overhead and the loss of the system throughput while improving the accuracy of cell the discovery, synchronization, measurement, and the like.

For example, for the M carriers, M may be a positive integer, and M carriers may be, such as, 1 carrier, 4 carriers, 12 carriers, 24 carriers, 32 carriers, 48 carriers, 64 carriers, 96 carriers, 128 carriers, 144 carriers. For another example, if the influence of a direct current carrier is considered, the M carriers may be 3 carriers, 11 carriers, 23 carriers, 31 carriers, 47 carriers, 63 carriers, 95 carriers, 127 carriers, 143 carriers, etc. For another example, M carriers are carriers belonging to M_RB RBs, for example, M_RB may be 1, 2, 4, 6, 8, 10, 12, 16, 20, 22, and 24. Similarly, in the solution of the example, since it technically ensures that the transmission of the reference signal (e.g., the synchronization signal) does not occupy the independent frequency-domain resources, but can share resources with transmission of other signals and information, the additional resource overhead and the loss of the system throughput may not be caused.

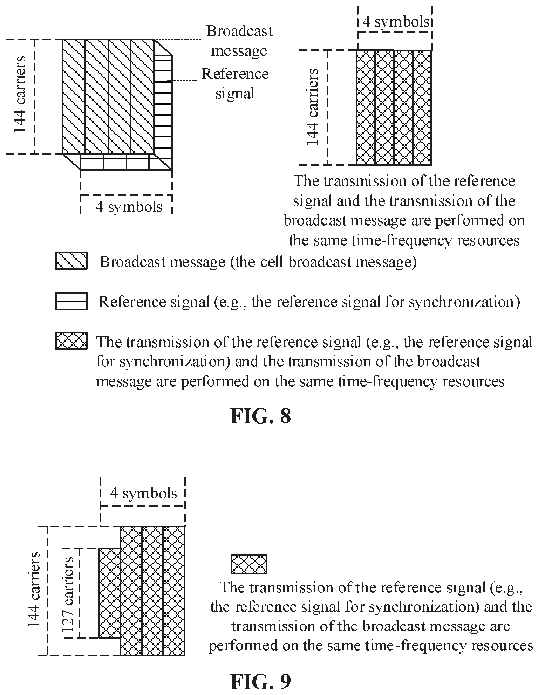

A specific example is shown in FIG. 8. Within the time-frequency resources of 144 carriers and 4 symbols, both the synchronization signal and the broadcast message (PBCH channel) occupy the aforementioned resources to respectively perform the transmission of the synchronization signal and the transmission of the cell broadcast information, to form the SSB transmission solution and the SSB format where the superimposed transmission of the synchronization signal and the broadcast message is performed.

It is to be noted that the reference signal (the synchronization signal) and the first data (the cell broadcast data, e.g., the cell broadcast data carried on the PBCH channel) that are transmitted in the superimposed manner may occupy different frequency-domain resources on different symbols. For example, the frequency-domain resources of M_n subcarriers are occupied on the n-th symbol where the superimposed transmission of the reference signal and the first data is performed. For different symbols n, there may be different values of M_n, where n is a positive integer belonging to 1 to N. M_n may be a positive integer, and may be, such as, 1 carrier, 4 carriers, 12 carriers, 24 carriers, 32 carriers, 48 carriers, 64 carriers, 96 carriers, 128 carriers, 144 carriers. Alternatively, if the influence of the direct current carrier is considered, the M_n carriers may be 3 carriers, 11 carriers, 23 carriers, 31 carriers, 47 carriers, 63 carriers, 95 carriers, 127 carriers, 143 carriers, etc. Alternatively, M_n carriers are carriers belonging to M_RB RBs. For example, M_RB may be 1 RB, 2 RBs, 4 RBs, 6 RBs, 8 RBs, 10 RBs, 12 RBs, 16 RBs, 20 RBs, 22 RBs, or 24 RBs.

A specific example is shown in FIG. 9. The first superimposed symbol occupies 127 subcarriers, and each of the second superimposed symbol, the third superimposed symbol and the fourth superimposed symbol occupies 144 carriers. Both the synchronization signal and the broadcast message (PBCH channel) occupy the aforementioned resources to perform the superimposed transmission of the synchronization signal and cell broadcast information, to form the SSB transmission solution and the SSB format where the superimposed transmission of the synchronization signal and the broadcast message is performed.

It is to be noted that the reference signal (the synchronization signal) and the first data (the cell broadcast data, e.g., cell broadcast data carried on the PBCH channel) that are transmitted in the superimposed manner may be consecutive or non-consecutive on the time-domain resources, and may be consecutive or non-consecutive on the frequency-domain resources.

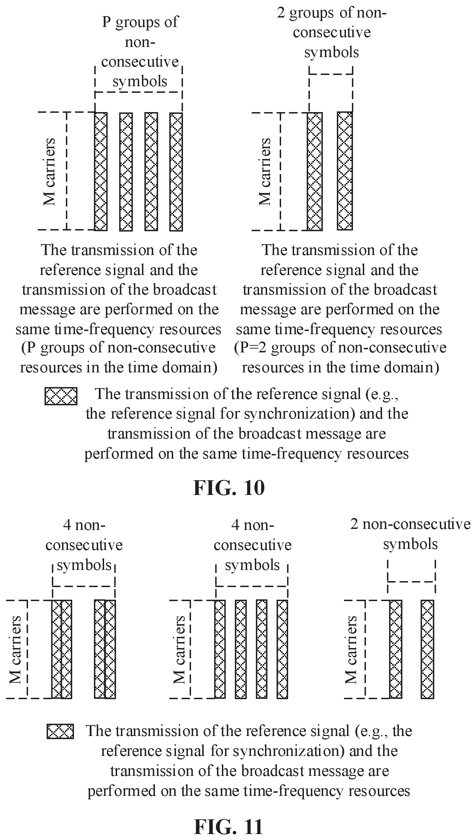

When the reference signal is used for the synchronization, the increase of the span in the time is beneficial to obtaining better synchronization effect, for example, obtaining better Doppler estimation. Based on the aforementioned consideration, when designing that the synchronization signal and the broadcast message (PBCH channel) occupy the same resources to respectively perform the transmission of the synchronization signal and the transmission of the cell broadcast information, P groups of non-consecutive symbols in the time domain may be used to form a time-domain non-consecutive SSB format where the superimposed transmission of the synchronization signal and the broadcast message is performed, as shown in FIG. 10. Among the P groups of non-consecutive symbols, each group of symbols is composed of one or more symbols, for example, one symbol or two symbols. Between P groups of non-consecutive symbols, each group of symbols is separated by one or more symbols from another group of symbols, for example, separated by K1 symbols. K1 is a positive integer, for example, K1 is 1, 2, 3, 4, 5, 6, 7, 8, 14, 28, etc.

Three specific examples are shown in FIG. 11. For example, there are two groups of symbols, each group of symbols occupies two symbols, and there are two symbols between the two groups of symbols. For another example, there are 4 groups of symbols in total, each group of symbols occupies 1 symbol, and there is 1 symbol between two adjacent groups of symbols. For another example, there are two groups of symbols in total, each group of symbols occupies one symbol, and there is 1 symbol between two adjacent groups of symbols. On each group of symbols, the superimposed transmission of the synchronization signal and the broadcast message is performed on the same time-frequency resources.

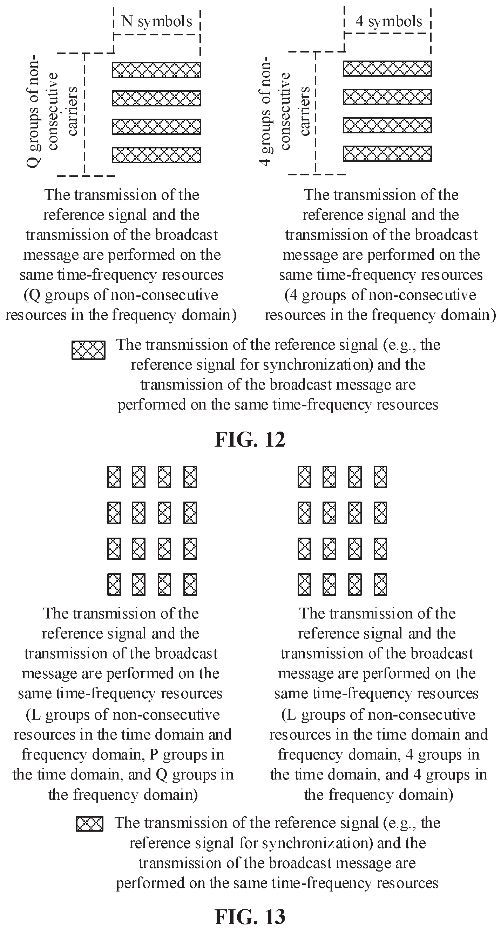

When the reference signal is used for the synchronization and the channel estimation, the increase of the span in the frequency domain is beneficial to obtaining better synchronization effect, for example, obtaining the better frequency offset estimation and channel estimation Based on the aforementioned consideration, when designing that the synchronization signal and the broadcast messages (PBCH channel) occupy the same resources to respectively perform the transmission of the synchronization signal and the transmission of the cell broadcast information, based on the aforementioned solution, Q groups of non-consecutive carriers in the frequency domain may be used to form a frequency-domain non-consecutive SSB format where the superimposed transmission of the synchronization signal and the broadcast message is performed, as shown in FIG. 12. Among the Q groups of non-consecutive carriers, each group of carriers is composed of one or more carriers, for example, 1 carrier, 2 carriers, 4 carriers, or 6 carriers. Between Q groups of non-consecutive carriers, each group of carriers is separated by one or more carriers from another group of carriers, for example, separated by K2 carriers. K2 is a positive integer, for example, K2 is 1, 2, 3, 4, 6, 12, etc. Among the Q groups of non-consecutive carriers, each group of carriers is composed of one or more RBs, for example, 1 RB, 2 RBs, 4 RBs, or 6 RBs. Between the Q groups of non-consecutive carriers, each group of carriers is separated by one or more RBs from another group of carriers, for example, separated by K2 RBs. K2 is a positive integer, for example, K2 is 1, 2, 3, 4, 6, 12, etc.

Furthermore, under the design consideration of the discontinuity in the time domain and the discontinuity in the frequency domain, the manner where the transmission of the reference signal (e.g., the synchronization signal) and the transmission of the first data (e.g., the cell broadcast information) are performed on the same time-frequency resources further includes: for one SSB, non-consecutive transmission is performed on both the time domain and the frequency domain, as shown in FIG. 13. Based on the aforementioned consideration, the synchronization signal and the broadcast message (PBCH channel) occupy the same resources to respectively perform the transmission of the synchronization signal and the transmission of the cell broadcast information. For the transmission resources, in the time domain, P groups of non-consecutive symbols may be used. Among the P groups of non-consecutive symbols, each group of symbols is composed of one or more symbols, for example, 1 symbol or 2 symbols. Between P groups of non-consecutive symbols, each group of symbols is separated by one or more symbols from another group of symbols, for example, separated by K1 symbols. K1 is a positive integer, for example, K1 is 1, 2, 3, 4, 5, 6, 7, 8, 14, 28, etc. In the frequency domain, the Q groups of non-consecutive carriers may be used. Among the Q groups of non-consecutive carriers, each group of carriers is composed of one or more carriers, for example, 1 carrier, 2 carriers, 4 carriers, and 6 carriers. Between the Q groups of non-consecutive carriers, each group of carriers is separated by one or more carriers from another group of carriers, for example, separated by K2 carriers. K2 is a positive integer, for example, K2 is 1, 2, 3, 4, 6, 12, etc. Among the Q groups of non-consecutive carriers, each group of carriers is composed of one or more RBs, for example, 1 RB, 2 RBs, 4 RBs, and 6 RBs. Between the Q groups of non-consecutive carriers, each group of carriers is separated by one or more RBs from another group of carriers, for example, separated by K2 RBs. K2 is a positive integer, for example, K2 is 1, 2, 3, 4, 6, 12, etc.

Example 2, a superposition design when multiple reference signals are present.

The reference signal described in Example 1 may be the synchronization signal and/or the demodulation reference signal, and may be further subdivided into that the reference signal may be one or more of: a synchronization signal, a primary synchronization signal, a secondary synchronization signal, a demodulation reference signal, and other reference signals. The following five examples are given.
(1) The reference signal described in the example may be a first reference signal, and the first reference signal is the synchronization signal.
(2) The reference signal described in the example may be a second reference signal and a third reference signal. The second reference signal is the primary synchronization signal, and the third reference signal is the secondary synchronization signal.
(3) The reference signal described in the example may be a first reference signal and a fourth reference signal. The first reference signal is the synchronization signal, and the fourth reference signal is the demodulation reference signal.
(4) The reference signal described in the example may be a second reference signal, a third reference signal and a fourth reference signal. The second reference signal is the primary synchronization signal, the third reference signal is the secondary synchronization signal, and the fourth reference signal is the demodulation reference signal.
(5) The reference signal described in the example may be a fourth reference signal, and the fourth reference signal is the demodulation reference signal.

The example provides an SSB superposition design when multiple different reference signals are present, which has a characteristic of multiplexing the same time-frequency resources for the transmission of the multiple reference signals and the transmission of the first data (the cell broadcast information).

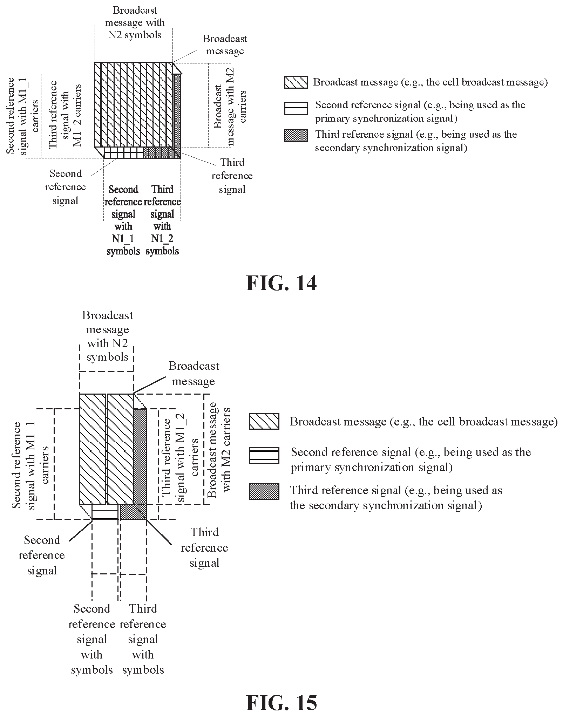

The superimposed transmission of the reference signal(s) (e.g., the primary synchronization signal and the secondary synchronization) and the first data (the cell broadcast data, e.g., the cell broadcast data carried on the PBCH channel) is performed on N symbols and M carriers, to form an SSB transmission solution and an SSB format where the superimposed transmission of the synchronization signals (the primary synchronization signal and the secondary synchronization) and the broadcast message is performed. The reference signal is composed of a second reference signal and a third reference signal. For example, the second reference signal is the primary synchronization signal and the third reference signal is the secondary synchronization signal. The second reference signal and the third reference signal occupy different time-domain resources. For example, the second reference signal occupies N1_1 symbols and the third reference signal occupies N1_2 symbols. The second reference signal and a part of the first data (the cell broadcast data, e.g., the cell broadcast data carried on the PBCH channel) occupy the same time-frequency domain resources, and the third reference signal and another part of the first data (the cell broadcast data, e.g., the cell broadcast data carried on the PBCH channel) occupy the same time-frequency domain resources, as shown in FIG. 14.

For example, in the time domain, N1_1 and N1_2 may be one or more symbols in one slot, such as: 1 symbol, 2 symbols, 3 symbols, 4 symbols, 5 symbols, 6 symbols, 7 symbols, 8 symbols, 9 symbols, 10 symbols, 11 symbols, 12 symbols, 14 symbols, 14 symbols. The N1_1 and N1_2 may be symbols in multiple slots, all of the symbols among the multiple slots, or a part of the symbols among the multiple slots. In the frequency domain, the second reference signal, the third reference signal and the first data may adopt, on different symbols, the same or the different transmission bandwidth, and details are not elaborated herein again.

A specific example is shown in FIG. 15. In the time-frequency resources of 2 symbols, the second reference signal (e.g., the primary synchronization signal) occupies one symbol and the third reference signal (e.g., the secondary synchronization signal) occupies one symbol. The transmission of the first data (the cell broadcast message) is also performed on both the two symbols, which forms the SSB transmission solution and the SSB format where the superimposed transmission of the master synchronization signal, the slave synchronization signal and the broadcast messages is performed. On the first symbol, the frequency-domain resources for the superimposed transmission of the second reference signal and the first data are M1_1 carriers, and on the second symbol, the frequency-domain resources for the superimposed transmission of the third reference signal and the first data are M1_2 carriers. M1_1 may be the same as M1_2. Alternatively, M1_1 may be different from M1_2, for example, occupying different RBs.

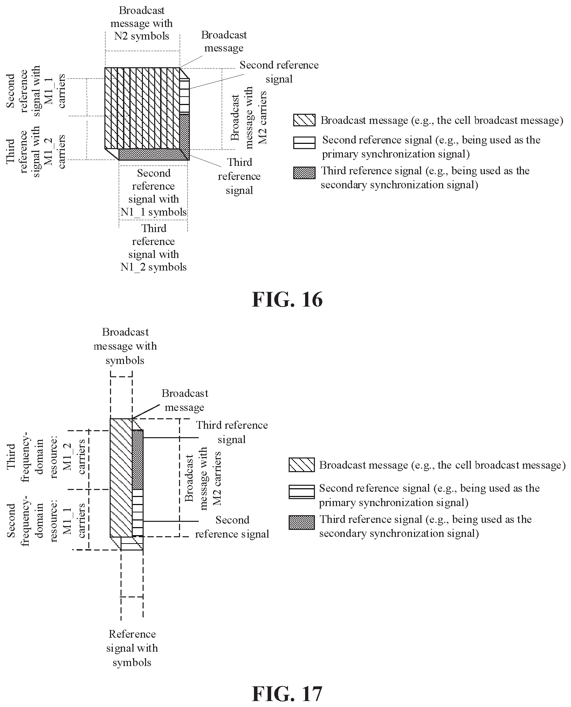

The superimposed transmission of the reference signals (e.g., the primary synchronization signal and the secondary synchronization) and the first data (the cell broadcast data, e.g., the cell broadcast data carried on the PBCH channel) is performed on N symbols and M carriers, to form an SSB transmission solution and an SSB format where the superimposed transmission of the synchronization signals (the primary synchronization signal and the secondary synchronization) and the broadcast message is performed. The reference signal is composed of a second reference signal and a third reference signal. For example, the second reference signal is the primary synchronization signal and the third reference signal is the secondary synchronization signal. The second reference signal and the third reference signal occupy different frequency-domain resources. For example, the second reference signal occupies M1_1 carriers and the third reference signal occupies M1_2 carriers. The second reference signal and a part of the first data (the cell broadcast data, e.g., the cell broadcast data carried on the PBCH channel) occupy the same time-frequency domain resources, and the third reference signal and another part of the first data (the cell broadcast data, e.g., the cell broadcast data carried on the PBCH channel) occupy the same time-frequency domain resources, as shown in FIG. 16.

A specific example is shown in FIG. 17. Within a time-frequency resource of one (or two) symbols, the second reference signal (e.g., the primary synchronization signal) occupies a first frequency-domain resource (e.g., 10 RBs), and the third reference signal (e.g., the secondary synchronization signal) occupies a second frequency-domain resource (e.g., another 10 RBs). The transmission of the first data (the cell broadcast message) is also performed on the symbols for the reference signal, which forms the SSB transmission solution and the SSB format where the superimposed transmission of the master synchronization signal, the slave synchronization signal and the broadcast messages is performed.

Example 3, a use case where multiple reference signals are superimposed and are superimposed with the first data.

The following three examples are given.
(1) The reference signal described in the example may be a second reference signal and a third reference signal. The second reference signal is the primary synchronization signal, and the third reference signal is the secondary synchronization signal.
(2) The reference signal described in the example may be a first reference signal and a fourth reference signal. The first reference signal is the synchronization signal, and the fourth reference signal is the demodulation reference signal.
(3) The reference signal described in the example may be a second reference signal, a third reference signal and a fourth reference signal. The second reference signal is the primary synchronization signal, the third reference signal is the secondary synchronization signal, and the fourth reference signal is the demodulation reference signal.

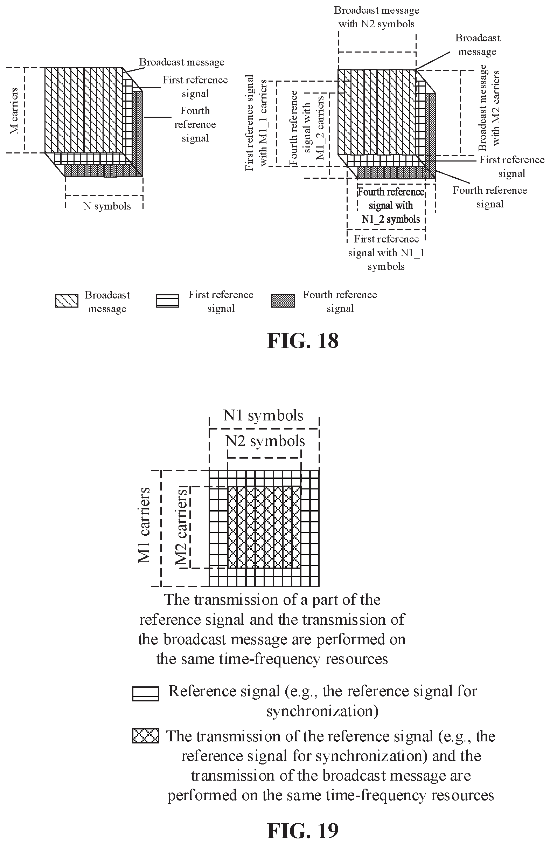

The superimposed transmission of X types of reference signals is performed on time-frequency domain resources (on N symbols and M carriers). Taking X equal to 2 as an example, the superimposed transmission of two or more types of reference signals is performed on the same time-domain and frequency-domain resources. For example, the first reference signal is the synchronization signal, and the fourth reference signal is the DMRS. Alternatively, for example, the second reference signal is the primary synchronization signal and the third reference signal is the secondary synchronization signal. For another example, the superimposed transmission of X types of reference signals is performed on the same time-domain and frequency-domain resources. The X types of reference signals are X types of reference signals of the synchronization signal, the primary synchronization signal, the secondary synchronization signal, the DMRS, a Channel State Information-Reference Signal (CSI-RS), and a Positioning Reference Signal (PRS), where a value of X is a positive integer greater than 1. The upper limit of reference signals that can be transmitted in the superimposed manner does not exceed Y types, for example, the value of Y is 2, 4, 8, 16, etc. As shown in FIG. 18, the superimposed transmission of the multiple types of reference signals that are transmitted in the superimposed manner on the same time-domain and frequency-domain resources and the first data (the cell broadcast data, e.g., the cell broadcast data carried on a PBCH channel) is performed.

For example, on N symbols and M carriers, the superimposed transmission of the primary synchronization signal, the secondary synchronization signal and the broadcast message is performed, to form the SSB transmission solution and the SSB format where the superimposed transmission of the multiple types of the reference signals and the first data is performed.

For example, on the N symbols and the M carriers, the superimposed transmission of the synchronization signal, the broadcast message and the DMRS is performed, to form the SSB transmission solution and the SSB format where the superimposed transmission of the multiple types of the reference signals and the first data is performed.

In addition, the time-domain symbols of N 1_1 symbols occupied by the first reference signal, the time-domain symbols of N1_2 symbols occupied by the fourth reference signal, and the time-domain symbols of N2 symbols occupied by the first data (the cell broadcast message) may be completely or partially overlapped. For example, N1_1 and/or N1_2 may be less than, equal to, or larger than N2. On the time-domain resource positions, the positions occupied by the first reference signal and the fourth reference signal may have the same resources as the time-domain positions occupied by the first data (the cell broadcast message), or may have resources that is a subset or a superset of the resources on the time-domain positions occupied by the first data (the cell broadcast message). The first reference signal and the fourth reference signal may be replaced with the second reference signal and the third reference information.

In addition, the frequency-domain carriers of M1_1 carriers occupied by the first reference signal, the frequency-domain carriers of M1_2 carriers occupied by the fourth reference signal, and the frequency-domain carriers of M2 carriers occupied by the first data (the cell broadcast message) may be completely or partially overlapped. For example, M1_1 and/or M1_2 may be less than, equal to, or larger than M2. On the frequency-domain resource positions, the positions occupied by the first reference signal and the fourth reference signal may have the same resources as the frequency-domain positions occupied by the first data (the cell broadcast message), or may have the resources being a subset or a superset of the resources on the frequency-domain positions occupied by the first data (the cell broadcast message). The first reference signal and the fourth reference signal may be replaced with the second reference signal and the third reference information.

Example 4, superimposed transmission of a part of the reference signal and the first data is considered.

On the basis of the aforementioned examples, it is further considered that for some receivers with poor performance, in the case where the reference signal is completely superimposed with the data, there will be a problem that the tasks of the synchronization, the measurement, the channel estimation and the like are performed based on the reference signal. In this example, based on the design of each aforementioned example, a design solution where a part of the reference signal is superimposed with the first data is given, and in the design solution, resources may be reserved/configured for non-superimposed transmission of the reference signal.

As shown in FIG. 19, on a resource range subset of a resource range (e.g., a range of N1 symbols and M1 carriers that include consecutive resources or non-consecutive resources) occupied by the reference signal, the superimposed transmission of the reference signal (e.g., the synchronization signal or the DMRS signal) and the first data (the cell broadcast information) is performed. Herein, the subset may be a subset in the time domain or a subset in the frequency domain, including a consecutive subset and a non-consecutive subset.

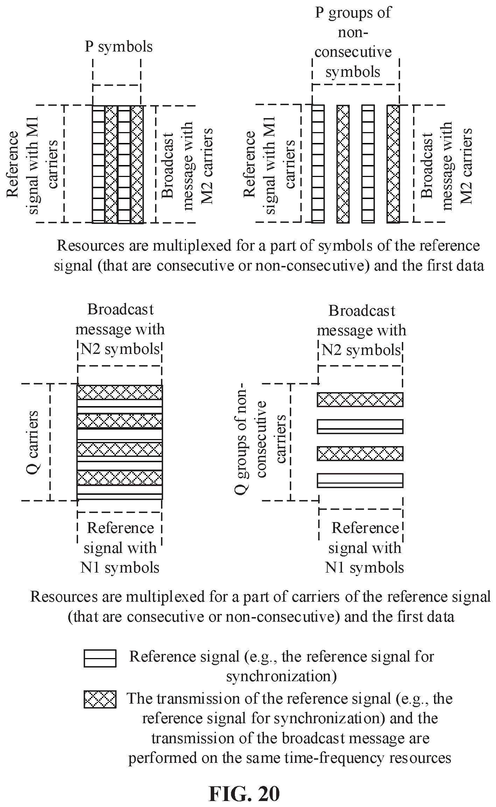

Within the transmission range, as shown in FIG. 20.

In the time domain, there may be one or more symbols (all or a part of carriers on the symbols) on which only the transmission of the reference signal is performed, for example, only the transmission of the synchronization signal is performed or only the transmission of the DMRS signal of the PBCH is performed. Other positions of the SSB are used for the superimposed transmission of the reference signal (e.g., the synchronization signals or the DMRS signal) and first data (the cell broadcast information).

In the frequency domain, there may be one or more carriers (all or a part of symbols on the carriers) on which only the transmission of the reference signal is performed, for example, only the transmission of the synchronization signal is performed or only the transmission of the DMRS of the PBCH is performed. Furthermore, the non-superimposed transmission part is present in both the time domain and frequency domain. Other positions of the SSB are used for the superimposed transmission of the reference signal (e.g., the synchronization signals or the DMRS signal) and first data (the cell broadcast information).

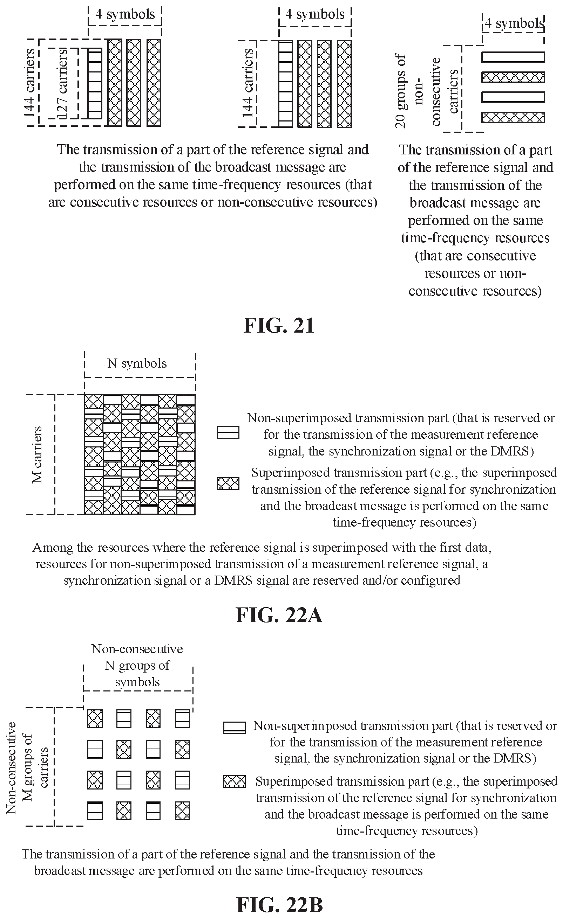

Several specific examples are shown in FIG. 21.
(1) Within an SSB range composed of N symbols (consecutive symbols or non-consecutive symbols) in the time domain, for example 4 symbols, and M carriers in the frequency domain, for example carriers within 20 RBs, the transmission of the reference signal (e.g., the synchronization signal with the frequency-domain length of R carriers, for example 127 carriers or 144 carriers) is performed separately on the first symbol, and the superimposed transmission of the reference signal (e.g., the synchronization signal) and the first data (e.g., the cell broadcast information) is performed on several subsequent symbols, for example, three subsequent symbols
(2) Within an SSB range composed of N symbols (consecutive symbols or non-consecutive symbols) in the time domain, for example 4 symbols, and M carriers in the frequency domain, for example carriers within 20 RBs, there are U groups of carriers in the frequency domain, the transmission of the reference signal (e.g., the synchronization signal) is performed separately on a part of groups of carriers, and the superimposed transmission of the reference signal (e.g., the synchronization signal) and the first data (e.g., the cell broadcast information) is performed on another part of groups of carriers.

For example, each group of carriers includes carriers within one RB, the transmission of the reference signal (e.g., the synchronization signal) is performed separately on the odd groups of carriers, and the superimposed transmission of the reference signal (e.g., the synchronization signal) and the first data (e.g., the cell broadcast information) is performed on the even groups of carriers. Alternatively, the transmission of the reference signal (e.g., synchronization signal) is performed separately on the even groups of carriers and the superimposed transmission of the reference signal (e.g., the synchronization signal) and the first data (e.g., the cell broadcast information) is performed on the odd groups of carriers.

For example, each group of carriers includes U1 carriers, the transmission of the reference signal (e.g., the synchronization signal) is performed separately on each group of carriers having an interval of U2 groups of carriers with another group of carriers, and the superimposed transmission of the reference signal (e.g., the synchronization signal) and the first data (e.g., the cell broadcast information) is performed on resource positions of the remaining groups of carrier.

Furthermore, from the perspective of resource allocation flexibility, this example gives, at the RE level, a design where resources for the non-superimposed transmission of the measurement reference signal, the synchronization signal, or the DMRS signal are reserved/configured within resources where the reference signal is superimposed with the first data.

As shown in FIG. 22A and FIG. 22B, in the SSB range composed of N symbols (consecutive symbols or non-consecutive symbols) in the time domain, for example, 4 symbols, and M carriers in the frequency domain, for example, carriers within 20 RBs, 24 RBs, or 51 RBs, only the transmission of the reference signal is performed on a part of REs, for example, only the transmission of the synchronization signal or only the transmission of the DMRS signal of the PBCH. The superimposed transmission of the reference signal and the first data (the cell broadcast information) is performed on a part other than the aforementioned REs. Herein, RE is a resource element, and may be 1 symbol in the time domain and 1 carrier in the frequency domain; or may be multiple symbols in the time domain and multiple carriers in the frequency domain.

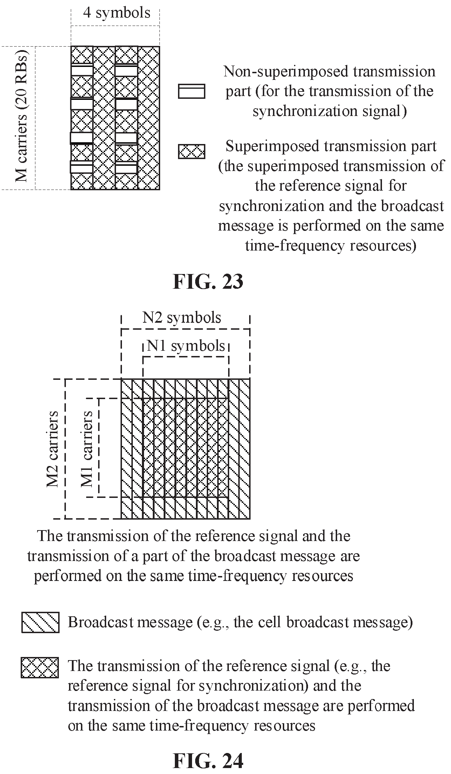

A specific example is shown as FIG. 23, in an SSB range of 4 symbols in the time domain and 20 RBs in the frequency domain, for example, the transmission of the reference signal (e.g., synchronization signal) is performed at intervals of L carriers on each of the first symbol and the third symbol, and the superimposed transmission of the reference signal (e.g., the synchronization signal) and first data (e.g., the cell broadcast information) is performed on all or a part of remaining resource positions.

Example 5, superimposed transmission of the reference signal and a part of the first data is a considered.

On the basis of each aforementioned example, it is further included that it is considered that when the first data (e.g., the cell broadcast message) has a relatively large content, the time-frequency resources occupied by the first data are relatively large. In this case, it is not necessary to perform the transmission of the reference signal in the superimposed manner on all the resources of the first data. When the reference signal is already able to provide sufficient functions such as the synchronization, the measurement, the cell discovery, the channel estimation, the sensing, the positioning, etc., the transmission of the reference signal in the superimposed manner on more resources will bring the problem of redundant transmission, it will lead to no more gain, but only a certain amount of interference for the first data.

In view of the aforementioned problem, in this example, based on the design of each example, a design solution of the superimposed transmission of the reference signal and a part of the first data is given.

As shown in FIG. 24, on a resource range subset of a resource range (e.g., a range of N2 symbols and M2 carriers that include consecutive resources or non-consecutive resources) occupied by the first data (the broadcast message), the superimposed transmission of the reference signal (e.g., the synchronization signal or the DMRS signal) and the first data (the cell broadcast information) is performed. Herein, the subset may be a subset in the time domain or a subset in the frequency domain, including a consecutive subset and a non-consecutive subset.

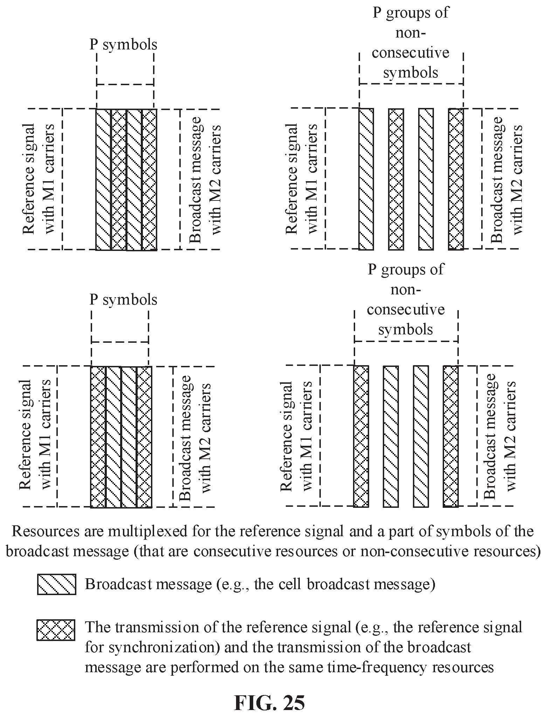

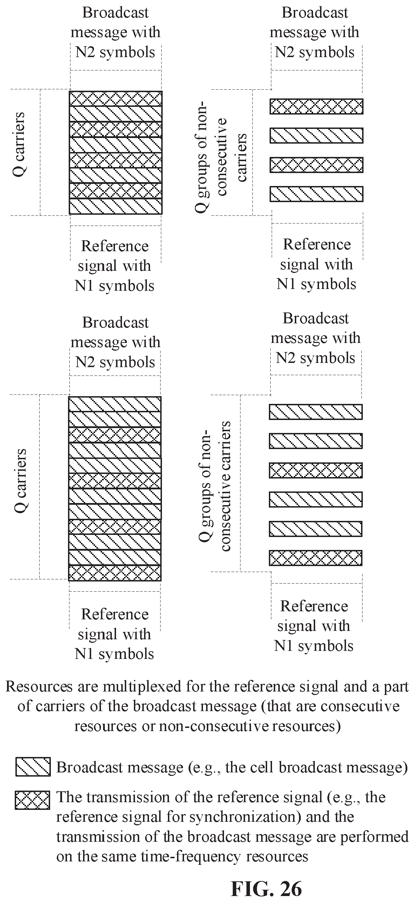

Within the transmission range, as shown in FIG. 25 and FIG. 26.

In the time domain, there may be one or more symbols (all or part of the carriers on the symbols) on which only the transmission of the first data (e.g., the broadcast message) is performed, for example, being used as a PBCH channel for only the transmission of the MIB, the transmission of the SIB1, or the transmission of other system messages, etc. Other positions of the SSB are used for the superimposed transmission of the reference signal (e.g., the synchronization signals or the DMRS signal) and first data (the cell broadcast information).

In the frequency domain, there may be one or more carriers (all or part of the symbols on the carriers) on which only the transmission of the first data (e.g., the broadcast message) is performed, for example, being used as a PBCH channel for only the transmission of the MIB, the transmission of the SIB1, or the transmission of other system messages, etc. Other positions of the SSB are used for the superimposed transmission of the reference signal (e.g., the synchronization signals or the DMRS signal) and first data (the cell broadcast information).

On the basis of each aforementioned example, furthermore, in consideration of flexibility of configuration and distribution of reference signals over more time-frequency resource ranges, this example also includes giving, at the RE level, a resource subset where the reference signal is superimposed with the first data or a resource subset on which only the transmission of the first data (e.g., the broadcast message) is performed.

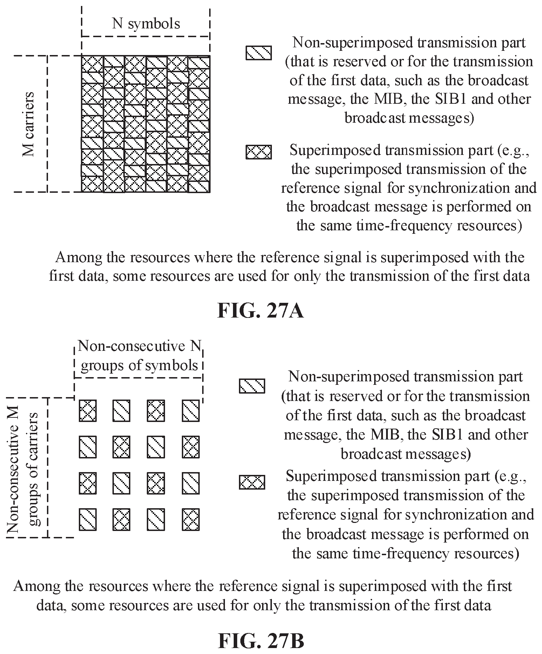

As shown in FIG. 27A and FIG. 27B, within the SSB range composed of N symbols (consecutive symbols or non-consecutive symbols) in the time domain, N is a positive integer, and M carriers in the frequency domain, M is a positive integer, only the transmission of the first data (e.g., the broadcast message) is performed on a part of REs, for example, being used as a PBCH channel for only the transmission of the MIB, the transmission of SIB1, or the transmission of other system messages, etc. The superimposed transmission of the reference signal and the first data (the cell broadcast information) is performed on the part other than the aforementioned REs. Herein, RE is a resource element, and may be 1 symbol in the time domain and 1 carrier in the frequency domain; or may be multiple symbols in the time domain and multiple carriers in the frequency domain.

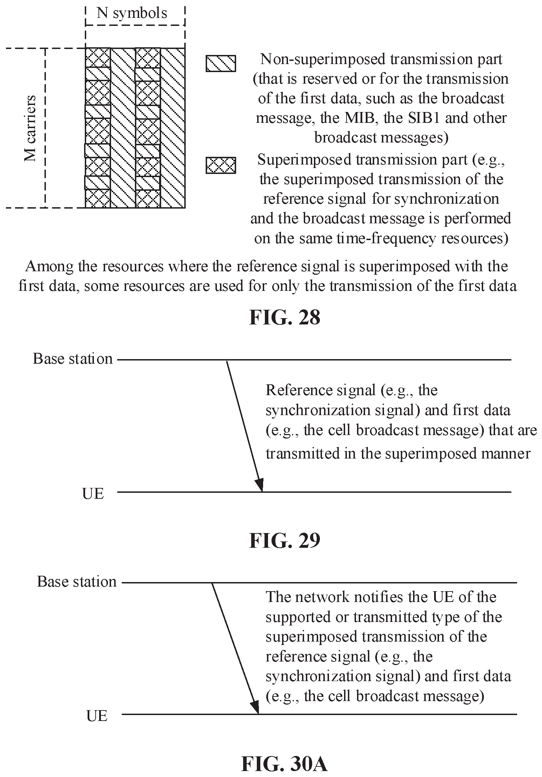

A specific example is shown as FIG. 28, in an SSB range of N symbols in the time domain and M carriers in the frequency domain, for example, the superimposed transmission of the reference signal (e.g., synchronization signal) and the first data (e.g., the cell broadcast information) is performed at intervals of L carriers on each of the first symbol and the third symbol, and the transmission of the first data (e.g., the cell broadcast information) is performed on all or a part of remaining resource positions.

Others.

The SSB in each aforementioned example, or the reference signal and the first data that are transmitted in the superimposed manner in each aforementioned example, may be sent by the base station and received by the UE, as shown in FIG. 29.

Regarding the type of the aforementioned SSB, or the type of the superimposed transmission of the reference signal and the broadcast data, the network may notify the UE by using one or more of the following seven methods (which may be notifying a type of the transmission supported by the network or a type of transmission that is performing by the network, as shown in FIG. 30A).

(1) A broadcast message, such as the MIB, the SIB1, or the SIBx, (2) a Radio Resource Control (RRC) message, (3) a Media Access Control Control Element (MAC CE), (4) a Downlink Control Information (DCI) message, (5) a downlink message in the Random Access Channel (RACH) procedure, such as the MsgB, the Msg2 or the Msg4. (4) a Physical Downlink Control Channel (PDCCH), (5) a Physical Downlink Shared Channel (PDSCH), (6) an AI/ML-dedicated downlink channel, and (7) a network-side capability indication.

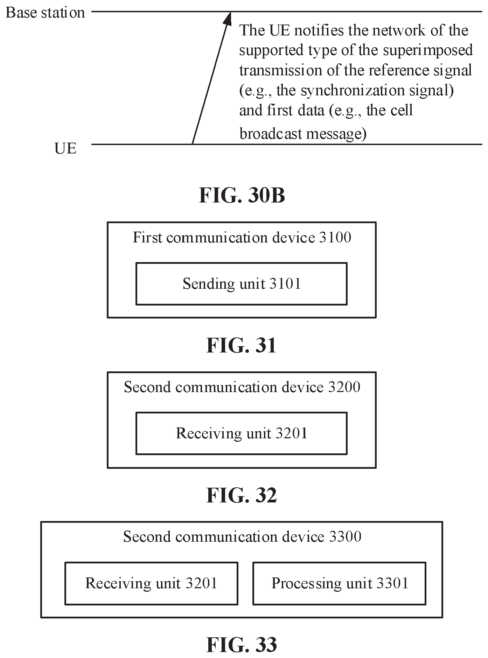

Regarding the type of aforementioned SSB or the type of the superimposed transmission of the reference signal and the broadcast data, the UE may notify the supported type to the network by using one or more of the following methods (as shown in FIG. 30B):
(1) an RRC message, (2) an Uplink Control Information (UCI) message, (3) an uplink messages in the in the RACH procedure, such as the MsgA, or the Msg3. (4) a Physical Uplink Control Channel (PUCCH), (5) a Physical Uplink Shared Channel (PUSCH), (6) an AI/ML-dedicated uplink channel, and (7) UE capability reporting.

The communication method according to the embodiments of the present disclosure includes a design method of the superimposed transmission of broadcast and synchronization signals in the SSB (considering the influence of the AIML). Through the embodiments of the present disclosure, the superimposed transmission of the reference signal (e.g., the synchronization signal) and the first data (e.g., the cell broadcast information) can be implemented, and this transmission manner enables that it unnecessary for the reference signal (e.g., the synchronization signal) and the first data (e.g., the cell broadcast information) to independently occupy different time-frequency resources, thereby avoiding a large amount of SSB transmission overhead. In addition, in the different implementations given in the various examples in the embodiments of the present disclosure, the problems of the time-domain synchronization requirement, frequency-domain synchronization requirement, resource allocation flexibility, and coexistence of multiple reference signals are fully considered, and the proposed manner where the superimposed transmission of the synchronization signal and the cell information is performed on the specific resources is beneficial to obtaining better effects of the functions of the time-domain synchronization, the frequency-domain synchronization, and the cell information acquisition and the like under the limitation of limited resource overhead.

FIG. 31 is a schematic block diagram of a first communication device 3100 according to an embodiment of the present disclosure. The first communication device 3100 may include a sending unit 3101.

The sending unit 3101 is configured to perform transmission of a reference signal and transmission of first data, where transmission resources for the reference signal are superimposed with transmission resources for the first data.

In an implementation, the transmission resources for the reference signal are completely or partially superimposed with the transmission resources for the first data.

In an implementation, time-domain resources and/or frequency-domain resources for the reference signal are completely superimposed with time-domain resources and/or frequency-domain resources for the first data.

In an implementation, time-domain resources and/or frequency-domain resources for the reference signal are partially superimposed with time-domain resources and/or frequency-domain resources for the first data.

In an implementation, time-domain resources for the reference signal are completely superimposed with time-domain resources for the first data, and frequency-domain resources for the reference signal are partially superimposed with frequency-domain resources for the first data.

In an implementation, frequency-domain resources for the reference signal are completely superimposed with frequency-domain resources for the first data, and time-domain resources for the reference signal are partially superimposed with time-domain resources for the first data.

In an implementation, the reference signal includes a first reference signal. The first reference signal and the first data occupy completely or partially same time-domain resources and/or frequency-domain resources.

In an implementation, the reference signal includes a second reference signal and a third reference signal. The second reference signal and the first data occupy completely or partially same time-domain resources and/or frequency-domain resources, and the third reference signal and the first data occupy completely or partially same time-domain resources and/or frequency-domain resources.

In an implementation, the second reference signal and the third reference signal occupy different time-domain resources, the second reference signal and a first part of the first data occupy completely or partially same time-domain resources and/or frequency-domain resources, and the third reference signal and a second part of the first data occupy completely or partially same time-domain resources and/or frequency-domain resources.

In an implementation, the second reference signal and the third reference signal occupy different frequency-domain resources, the second reference signal and a third part of the first data occupy completely or partially same time-domain resources and/or frequency-domain resources, and the third reference signal and a fourth part of the first data occupy completely or partially same time-domain resources and/or frequency-domain resources.

In an implementation, the reference signal includes a first reference signal and a fourth reference signal. The first reference signal, the fourth reference signal and the first data occupy completely or partially same time-domain resources and/or frequency-domain resources.

In an implementation, the reference signal includes a second reference signal, a third reference signal and a fourth reference signal. The second reference signal, the third reference signal, the fourth reference signal and the first data occupy completely or partially same time-domain resources and/or frequency-domain resources.

In an implementation, the reference signal includes a fourth reference signal, and the fourth reference signal and the first data occupy completely or partially same time-domain resources and/or frequency-domain resources.

In an implementation, the first reference signal is a synchronization signal.

In an implementation, the second reference signal is the primary synchronization signal, and the third reference signal is the secondary synchronization signal.

In an implementation, the fourth reference signal is the demodulation reference signal.

In an implementation, on one or more resource subsets within a resource range occupied by one reference signal, superimposed transmission of another reference signal and/or the first data is performed.

In an implementation, among REs where the reference signal is superimposed with the first data, an RE for non-superimposed transmission of a measurement reference signal, a synchronization signal or a DMRS is reserved and/or configured.

In an implementation, on one or more resource subsets within a resource range occupied by one piece of the first data, superimposed transmission of one or more reference signals is performed.

In an implementation, the resource subsets where the reference signal is superimposed with the first data are RE subsets, or resource subsets where only transmission of the first data is performed within the reference signal.

In an implementation, the one or more resource subsets include at least one of: subsets in a time domain, subsets in a frequency domain, consecutive subsets, and non-consecutive subsets.

In an implementation, the transmission resources include time-domain resources and/or frequency-domain resources. The time-domain resources include symbols, and the frequency-domain resources include carriers.

In an implementation, the reference signal and the first data occupy, on different symbols, completely same or partially same or different carriers.

In an implementation, the first data includes cell broadcast data.

In an implementation, the cell broadcast data includes at least one of: cell information, MIB information, and SIB information that are carried on a PBCH channel.

In an implementation, transmission of the reference signal and transmission of the first data are consecutive or non-consecutive on time-domain resources and/or frequency-domain resources.

In an implementation, each of a proportion of a transmission power occupied by the reference signal and a proportion of a transmission power occupied by the first data is a specific proportion.

In an implementation, the transmission power occupied by the reference signal and the transmission power occupied by the first data on one RE are limited based on a power proportion.

In an implementation, the transmission power occupied by the reference signal on REs in the transmission resources is a first proportion of a total power of the REs in the transmission resources.

The first communication device 3100 according to the embodiment of the present disclosure is able to implement the corresponding functions of the first communication device in the aforementioned method embodiments. The flow, function, implementation and beneficial effect corresponding to each module (sub-module, unit or component, etc.) in the first communication device 3100 will not be described here with reference to the corresponding description in the above method embodiments. It is to be noted that, the functions described in each module (sub-module, unit or component, etc.) in the first communication device 3000 of the embodiments of the present disclosure may be implemented by different modules (sub-modules, units or components, etc.) or by the same module (sub-module, unit or component, etc.).

FIG. 32 is a schematic block diagram of a second communication device 3200 according to an embodiment of the present disclosure. The second communication device 3200 may include a receiving unit 3201.

The sending unit 3201 is configured to receive a reference signal and first data, where transmission resources for the reference signal are superimposed with transmission resources for the first data. The reception resources for the reference signal and the first data are the same as the transmission resources.

FIG. 33 is a schematic block diagram of a second communication device 3300 according to another embodiment of the present disclosure. The second communication device may include one or more of the characteristics of the aforementioned second communication device. In an implementation, the second communication device further includes a processing unit 3301.

The processing unit 3301 is configured to parse the reference signal and the first data by using an AL and/or ML module.

In an implementation, the transmission resources for the reference signal are completely or partially superimposed with the transmission resources for the first data.

In an implementation, time-domain resources and/or frequency-domain resources for the reference signal are completely superimposed with time-domain resources and/or frequency-domain resources for the first data.

In an implementation, time-domain resources and/or frequency-domain resources for the reference signal are partially superimposed with time-domain resources and/or frequency-domain resources for the first data.

In an implementation, time-domain resources for the reference signal are completely superimposed with time-domain resources for the first data, and frequency-domain resources for the reference signal are partially superimposed with frequency-domain resources for the first data.

In an implementation, frequency-domain resources for the reference signal are completely superimposed with frequency-domain resources for the first data, and time-domain resources for the reference signal are partially superimposed with time-domain resources for the first data.

In an implementation, the reference signal includes a first reference signal, and the first reference signal and the first data occupy completely or partially same time-domain resources and/or frequency-domain resources.

In an implementation, the reference signal includes a second reference signal and a third reference signal. The second reference signal and the first data occupy completely or partially same time-domain resources and/or frequency-domain resources, and the third reference signal and the first data occupy completely or partially same time-domain resources and/or frequency-domain resources.

In an implementation, the second reference signal and the third reference signal occupy different time-domain resources, the second reference signal and a first part of the first data occupy completely or partially same time-domain resources and/or frequency-domain resources, and the third reference signal and a second part of the first data occupy completely or partially same time-domain resources and/or frequency-domain resources.

In an implementation, the second reference signal and the third reference signal occupy different frequency-domain resources, the second reference signal and a third part of the first data occupy completely or partially same time-domain resources and/or frequency-domain resources, and the third reference signal and a fourth part of the first data occupy completely or partially same time-domain resources and/or frequency-domain resources.

In an implementation, the reference signal includes a first reference signal and a fourth reference signal. The first reference signal, the fourth reference signal and the first data occupy completely or partially same time-domain resources and/or frequency-domain resources.

In an implementation, the reference signal includes a second reference signal, a third reference signal and a fourth reference signal. The second reference signal, the third reference signal, the fourth reference signal and the first data occupy completely or partially same time-domain resources and/or frequency-domain resources.

In an implementation, the reference signal includes a fourth reference signal, and the fourth reference signal and the first data occupy completely or partially same time-domain resources and/or frequency-domain resources.

In an implementation, the first reference signal is a synchronization signal.

In an implementation, the second reference signal is the primary synchronization signal, and the third reference signal is the secondary synchronization signal.

In an implementation, the fourth reference signal is the demodulation reference signal.

In an implementation, on one or more resource subsets within a resource range occupied by one reference signal, superimposed transmission of another reference signal and/or the first data is performed.

In an implementation, among REs where the reference signal is superimposed with the first data, an RE for non-superimposed transmission of a measurement reference signal, a synchronization signal or a DMRS is reserved and/or configured.

In an implementation, on one or more resource subsets within a resource range occupied by one piece of the first data, superimposed transmission of one or more reference signals is performed.

In an implementation, the resource subsets where the reference signal is superimposed with the first data are RE subsets, or resource subsets where only transmission of the first data is performed within the reference signal.

In an implementation, the one or more resource subsets include at least one of: subsets in a time domain, subsets in a frequency domain, consecutive subsets, and non-consecutive subsets.

In an implementation, the transmission resources include time-domain resources and/or frequency-domain resources. The time-domain resources include symbols, and the frequency-domain resources include carriers.

In an implementation, the reference signal and the first data occupy, on different symbols, completely same or partially same or different carriers.

In an implementation, the first data includes cell broadcast data.

In an implementation, the cell broadcast data includes at least one of: cell information, MIB information, and SIB information that are carried on a PBCH channel.

In an implementation, transmission of the reference signal and transmission of the first data are consecutive or non-consecutive on time-domain resources and/or frequency-domain resources.

In an implementation, each of a proportion of a transmission power occupied by the reference signal and a proportion of a transmission power occupied by the first data is a specific proportion.

In an implementation, the transmission power occupied by the reference signal and the transmission power occupied by the first data on one RE are limited based on a power proportion.

In an implementation, the transmission power occupied by the reference signal on REs in the transmission resources is a first proportion of a total power of the REs in the transmission resources.

The second communication device 3200, 3300 according to the embodiment of the present disclosure is able to implement the corresponding functions of the second communication device in the aforementioned method embodiments. The flow, function, implementation and beneficial effect corresponding to each module (sub-module, unit or component, etc.) in the second communication device 3200, 3300 will not be described herein with reference to the corresponding description in the above method embodiments. It is to be noted that, the functions described in each module (sub-module, unit or component, etc.) in the second communication device 3100 of the embodiments of the present disclosure may be implemented by different modules (sub-modules, units or components, etc.) or by the same module (sub-module, unit or component, etc.).

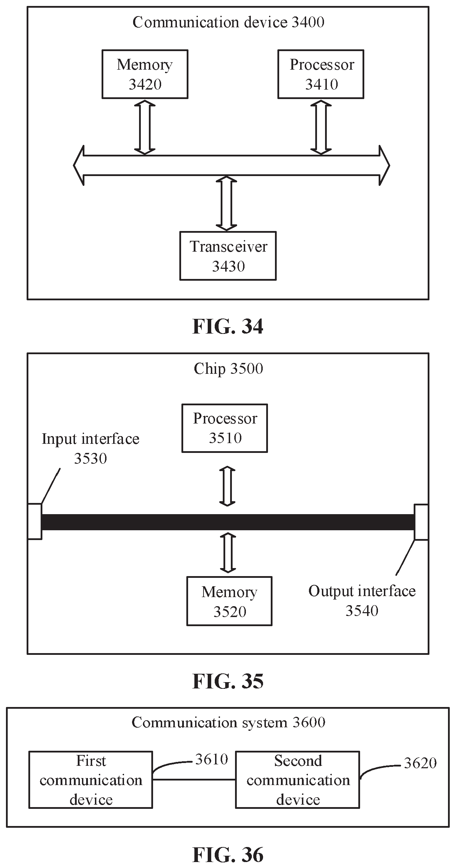

FIG. 34 is a schematic structural diagram of a communication device 3400 according to an embodiment of the present disclosure. The communication device 3400 includes a processor 3410. The processor 3410 is configured to invoke and execute a computer program from a memory, to enable the communication device 3400 to perform the methods in the embodiments of the present disclosure.

In an implementation, the communication device 3400 further includes a memory 3420. The processor 3410 is configured to invoke and execute a computer program from the memory 3420, to enable the communication device 3400 to perform the methods in the embodiments of the present disclosure.

The memory 3420 may be a separate device that is independent of the processor 3410 or may be integrated in the processor 3410.

In an implementation, the communication device 3400 may further include a transceiver 3430. The processor 3410 may control the transceiver 3430 to communicate with other devices. Specifically, the transceiver 3430 may transmit information or data to other devices, or receive information or data from other devices.

Herein, the transceiver 3430 may include a transmitter and a receiver. The transceiver 3430 may further include one or more antennas.

In an implementation, the communication device 3400 may be the first communication device in the embodiments of the present disclosure. The communication device 3400 may implement the corresponding flow implemented by the first communication device in various methods in the embodiments of the present disclosure. For brevity, details are not elaborated herein again.

In an implementation, the communication device 3400 may be the second communication device in the embodiments of the present disclosure. The communication device 3400 may implement the corresponding flow implemented by the second communication device in various methods in the embodiments of the present disclosure. For brevity, details are not elaborated herein again.

FIG. 35 is a schematic structural diagram of a chip 3500 according to an embodiment of the present disclosure. The chip 3500 includes a processor 3510. The processor 3510 is configured to invoke and execute a computer program from a memory, to implement the methods in the embodiments of the present disclosure.

In an implementation, the chip 3500 further includes a memory 3520. The processor 3510 is configured to invoke and execute a computer program from the memory 3520, to implement the method implemented by the first communication device or the second communication device in the embodiments of the present disclosure.

The memory 3520 may be a separate device that is independent of the processor 3510 or may be integrated in the processor 3510.

In an implementation, the chip 3500 may further include an input interface 3530. The processor 3510 may control the input interface 3530 to communicate with other devices or chips. Specifically, the input interface 3530 may acquire information or data sent by other devices or chips.

In an implementation, the chip 3500 may further include an output interface 3540. Herein, the processor 3510 may control the output interface 3540 to communicate with other devices or chips. Specifically, the output interface 3540 may output information or data to other devices or chips.

In an implementation, the chip may be applied to the first communication device in the embodiments of the present disclosure. The chip may implement the corresponding flow implemented by the first communication device in various methods in the embodiments of the present disclosure. For brevity, details are not elaborated herein again.

In an implementation, the chip may be applied to the second communication device in the embodiments of the present disclosure. The chip may implement the corresponding flow implemented by the second communication device in various methods in the embodiments of the present disclosure. For brevity, details are not elaborated herein again.

The chips applied to the network device and the terminal device may be the same chip or different chips.

It is to be understood that, the chip referred to in the embodiments of the present disclosure may also be referred to as a system-level chip, a system chip, a chip system, or a system-on-chip, etc.

The above processors may be general purpose processors, Digital Signal Processors (DSPSs), Field Programmable Gate Arrays (FPGAs), Application Specific Integrated Circuits (ASICs) or other programmable logic devices, transistor logic devices, and discrete hardware components. The aforementioned general purpose processor may be a microprocessor or the processor may be any conventional processor or the like.

The aforementioned memory in the embodiments of the present disclosure may be a volatile memory or a non-volatile memory, or may include both the volatile memory and the non-volatile memory. The non-volatile memory may be a Read-Only memory (ROM), a Programmable ROM (PROM), an Erasable PROM (EPROM), an Electrically EPROM (EEPROM) or a flash memory. The volatile memory may be a Random Access Memory (RAM).

It is to be understood that the abovementioned memories are exemplary but not restrictive, for example, the memory in the embodiments of the disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), and a Direct Rambus RAM (DR RAM). That is to say, the memories described in the embodiments of the disclosure are intended to include, but not limited to, these and any other suitable types of memories.

FIG. 36 is a schematic block diagram of a communication system 3600 according to an embodiment of the present disclosure. The communication system 3600 may include a first communication device 3610 and a second communication device 3620.

The first communication device 3610 includes: a sending unit, configured to perform transmission of a reference signal and first data, where transmission resources for the reference signal are superimposed with transmission resources for the first data.

The second communication device 3620 includes: a receiving unit, configured to receive a reference signal and first data, where transmission resources for the reference signal are superimposed with transmission resources for the first data.

Herein, the first communication device 3610 may be configured to implement the corresponding functions implemented by the first communication device in the foregoing methods. The second communication device 3620 may be configured to implement the corresponding functions implemented by the second communication device in the foregoing methods. For brevity, details are not elaborated herein again.

The aforementioned embodiments may be implemented in whole or in part by software, hardware, firmware or any combination thereof. When implemented in software, the aforementioned embodiments may be implemented in whole or in part in the form of a computer program product. The computer program product includes one or more computer instructions. When the computer program instructions are loaded and executed on a computer, the flows or functions may be generated in whole or in part according to the embodiments of the present disclosure. The computer may be a general-purpose computer, a dedicated computer, a computer network, or other programmable devices. The computer instructions may be stored in a computer-readable storage medium or transmitted from one computer-readable storage medium to another computer-readable storage medium. For example, the computer instructions may be transmitted from one Web site, computer, server, or data center to another Web site, computer, server, or data center in a wired (e.g., coaxial cable, optical fiber, Digital Subscriber Line (DSL)) manner or a wireless (e.g., infrared, wireless, microwave, etc.) manner. The computer-readable storage medium may be any available medium that a computer may access or may be a data storage device such as a server, a data center, or the like that is integrated with one or more available media. The available medium may be a magnetic medium (e.g., floppy disk, hard disk, magnetic tape), an optical medium (e.g., Digital Video Disc (DVD)), or a semiconductor medium (e.g., Solid State Disk (SSD)), etc.

It is further to be understood that in various embodiments of the present disclosure, the sequence number(s) of the above processes do not imply the sequence(s) of execution, and the sequence of execution of each process should be determined according to the functions and internal logic thereof, and should not constitute any limitation on the implementation process of the embodiments of the present disclosure.

It may be clearly understood by those skilled in the art that, for the specific working processes of the aforementioned apparatuses and units, reference may be made to the corresponding processes in the aforementioned method embodiments, and such specific working processes of the systems, devices and units are not described herein again for the purpose of convenient and brief description

The above descriptions are merely specific implementations of the disclosure, but are not intended to limit the scope of protection of the disclosure. Any variation or replacement readily figured out by a person skilled in the art within the technical scope disclosed in the disclosure shall fall within the scope of protection of the disclosure. Therefore, the scope of protection of the disclosure is defined by the scope of protection of the claims.

## Claims

1. A communication method, comprising:
transmitting, by a first communication device, a reference signal and first data, wherein transmission resources for the reference signal are superimposed with transmission resources for the first data.

2. The method of claim 1, wherein the transmission resources for the reference signal are completely superimposed and/or partially superimposed with the transmission resources for the first data.

3. The method of claim 2, wherein time-domain resources and/or frequency-domain resources for the reference signal are completely superimposed with time-domain resources and/or frequency-domain resources for the first data.

4. The method of claim 2, wherein time-domain resources and/or frequency-domain resources for the reference signal are partially superimposed with time-domain resources and/or frequency-domain resources for the first data.

5. The method of claim 2, wherein time-domain resources for the reference signal are completely superimposed with time-domain resources for the first data, and frequency-domain resources for the reference signal are partially superimposed with frequency-domain resources for the first data.

6. The method of claim 2, wherein frequency-domain resources for the reference signal are completely superimposed with frequency-domain resources for the first data, and time-domain resources for the reference signal are partially superimposed with time-domain resources for the first data.

7. The method of claim 2, wherein the reference signal comprises a first reference signal, and the first reference signal and the first data occupy completely or partially same time-domain resources and/or frequency-domain resources.

8. The method of claim 2, wherein the reference signal comprises a second reference signal and a third reference signal, the second reference signal and the first data occupy completely or partially same time-domain resources and/or frequency-domain resources, and the third reference signal and the first data occupy completely or partially same time-domain resources and/or frequency-domain resources.

9. The method of claim 8, wherein the second reference signal and the third reference signal occupy different time-domain resources, the second reference signal and a first part of the first data occupy completely or partially same time-domain resources and/or frequency-domain resources, and the third reference signal and a second part of the first data occupy completely or partially same time-domain resources and/or frequency-domain resources.

10. The method of claim 8, wherein the second reference signal and the third reference signal occupy different frequency-domain resources, the second reference signal and a third part of the first data occupy completely or partially same time-domain resources and/or frequency-domain resources, and the third reference signal and a fourth part of the first data occupy completely or partially same time-domain resources and/or frequency-domain resources.

11. The method of claim 2, wherein the reference signal comprises a first reference signal and a fourth reference signal, and the first reference signal, the fourth reference signal and the first data occupy completely or partially same time-domain resources and/or frequency-domain resources.

12. The method of claim 2, wherein the reference signal comprises a second reference signal, a third reference signal and a fourth reference signal, and the second reference signal, the third reference signal, the fourth reference signal and the first data occupy completely or partially same time-domain resources and/or frequency-domain resources.

13. The method of claim 2, wherein the reference signal comprises a fourth reference signal, and the fourth reference signal and the first data occupy completely or partially same time-domain resources and/or frequency-domain resources.

14. The method of claim 7 or 11, wherein the first reference signal is a synchronization signal.

15. The method of any one of claims 8, 9, 10 or 12, wherein the second reference signal is a Primary Synchronization Signal (PSS), and the third reference signal is a Secondary Synchronization Signal (SSS).

16. The method of claim 11, 12 or 13, wherein the fourth reference signal is a Demodulation Reference Signal (DMRS).

17. The method of claim 2, wherein on one or more resource subsets within a resource range occupied by one reference signal, superimposed transmission of another reference signal and/or the first data is performed.

18. The method of claim 17, wherein among Resource Elements (REs) where the reference signal is superimposed with the first data, an RE for non-superimposed transmission of a measurement reference signal, a synchronization signal or a DMRS is reserved and/or configured.

19. The method of claim 2, wherein on one or more resource subsets within a resource range occupied by one piece of the first data, superimposed transmission of one or more reference signals is performed.

20. The method of claim 19, wherein the resource subsets where the reference signal is superimposed with the first data are RE subsets, or resource subsets where only transmission of the first data is performed is in the reference signal.

21. The method of any one of claims 17 to 20, wherein the one or more resource subsets comprise at least one of: subsets in a time domain, subsets in a frequency domain, consecutive subsets, and non-consecutive subsets.

22. The method of claim 1 or 2, wherein the transmission resources comprise time-domain resources and/or frequency-domain resources, the time-domain resources comprise symbols, and the frequency-domain resources comprise carriers.

23. The method of claim 22, wherein the reference signal and the first data occupy, on different symbols, completely same or partially same or different carriers.

24. The method of any one of claims 1 to 23, wherein the first data comprises cell broadcast data.

25. The method of claim 24, wherein the cell broadcast data comprises at least one of: cell information, Master Information Block (MIB) information, and System Information Block (SIB) information that are carried on a Physical Broadcast Channel (PBCH) channel.

26. The method of any one of claims 1 to 25, wherein transmission of the reference signal and transmission of the first data are consecutive or non-consecutive on time-domain resources and/or frequency-domain resources.

27. The method of any one of claims 1 to 26, wherein each of a proportion of a transmission power occupied by the reference signal and a proportion of a transmission power occupied by the first data is a specific proportion.

28. The method of claim 27, wherein the transmission power occupied by the reference signal and the transmission power occupied by the first data on one RE are limited based on a power proportion.

29. The method of claim 27, wherein the transmission power occupied by the reference signal on REs in the transmission resources is a first proportion of a total power of the REs in the transmission resources.

30. A communication method, comprising:
receiving, by a second communication device, a reference signal and first data, wherein transmission resources for the reference signal are superimposed with transmission resources for the first data.

31. The method of claim 30, further comprising:
parsing, by the second communication device, the reference signal and the first data by using an Artificial Intelligence (AL) and/or a Machine Learning (ML) module.

32. The method of claim 30 or 31, wherein the transmission resources for the reference signal are completely superimposed and/or partially superimposed with the transmission resources for the first data.

33. The method of claim 32, wherein time-domain resources and/or frequency-domain resources for the reference signal are completely superimposed with time-domain resources and/or frequency-domain resources for the first data.

34. The method of claim 32, wherein time-domain resources and/or frequency-domain resources for the reference signal are partially superimposed with time-domain resources and/or frequency-domain resources for the first data.

35. The method of claim 32, wherein time-domain resources for the reference signal are completely superimposed with time-domain resources for the first data, and frequency-domain resources for the reference signal are partially superimposed with frequency-domain resources for the first data.

36. The method of claim 32, wherein frequency-domain resources for the reference signal are completely superimposed with frequency-domain resources for the first data, and time-domain resources for the reference signal are partially superimposed with time-domain resources for the first data.

37. The method of claim 32, wherein the reference signal comprises a first reference signal, and the first reference signal and the first data occupy completely or partially same time-domain resources and/or frequency-domain resources.

38. The method of claim 32, wherein the reference signal comprises a second reference signal and a third reference signal, the second reference signal and the first data occupy completely or partially same time-domain resources and/or frequency-domain resources, and the third reference signal and the first data occupy completely or partially same time-domain resources and/or frequency-domain resources.

39. The method of claim 38, wherein the second reference signal and the third reference signal occupy different time domain resources, the second reference signal and the first portion of 9. The method of claim 8, wherein the second reference signal and the third reference signal occupy different time-domain resources, the second reference signal and a first part of the first data occupy completely or partially same time-domain resources and/or frequency-domain resources, and the third reference signal and a second part of the first data occupy completely or partially same time-domain resources and/or frequency-domain resources.

40. The method of claim 38, wherein the second reference signal and the third reference signal occupy different frequency-domain resources, the second reference signal and a third part of the first data occupy completely or partially same time-domain resources and/or frequency-domain resources, and the third reference signal and a fourth part of the first data occupy completely or partially same time-domain resources and/or frequency-domain resources.

41. The method of claim 32, wherein the reference signal comprises a first reference signal and a fourth reference signal, and the first reference signal, the fourth reference signal and the first data occupy completely or partially same time-domain resources and/or frequency-domain resources.

42. The method of claim 32, wherein the reference signal comprises a second reference signal, a third reference signal and a fourth reference signal, and the second reference signal, the third reference signal, the fourth reference signal and the first data occupy completely or partially same time-domain resources and/or frequency-domain resources.

43. The method of claim 32, wherein the reference signal comprises a fourth reference signal, and the fourth reference signal and the first data occupy completely or partially same time-domain resources and/or frequency-domain resources.

44. The method of claim 37 or 41, wherein the first reference signal is a synchronization signal.

45. The method of any one of claims 38, 39, 40, or 42, wherein the second reference signal is a Primary Synchronization Signal (PSS), and the third reference signal is a Secondary Synchronization Signal (SSS).

46. The method of claim 41, 42 or 43, wherein the fourth reference signal is a Demodulation Reference Signal (DMRS).

47. The method of claim 32, wherein on one or more resource subsets within a resource range occupied by one reference signal, superimposed transmission of another reference signal and/or the first data is performed.

48. The method of claim 47, wherein among Resource Elements (REs) where the reference signal is superimposed with the first data, an RE for non-superimposed transmission of a measurement reference signal, a synchronization signal or a DMRS is reserved and/or configured.

49. The method of claim 32, wherein on one or more resource subsets within a resource range occupied by one piece of the first data, superimposed transmission of one or more reference signals is performed.

50. The method of claim 49, wherein the resource subsets where the reference signal is superimposed with the first data are RE subsets, or resource subsets where only transmission of the first data is performed within the reference signal.

51. The method of any one of claims 47 to 50, wherein the one or more resource subsets comprise at least one of: a subset in a time domain, a subset in a frequency domain, a consecutive subset, and a non-consecutive subset.

52. The method of claim 30, 31 or 32, wherein the transmission resources comprise a time-domain resource and/or a frequency-domain resource, the time-domain resource comprises a symbol, and the frequency-domain resource comprises a carrier.

53. The method of claim 52, wherein the reference signal and the first data occupy, on different symbols, completely same or partially same or different carriers.

54. The method of any one of claims 30 to 53, wherein the first data comprises cell broadcast data.

55. The method of claim 54, wherein the cell broadcast data comprises at least one of: cell information, Master Information Block (MIB) information, and System Information Block (SIB) information that are carried on a Physical Broadcast Channel (PBCH) channel.

56. The method of any one of claims 30 to 55, wherein transmission of the reference signal and transmission of the first data are consecutive or non-consecutive on time-domain resources and/or frequency-domain resources.

57. The method of any one of claims 30 to 56, wherein each of a proportion of a transmission power occupied by the reference signal and a proportion of a transmission power occupied by the first data is a specific proportion.

58. The method of claim 57, wherein the transmission power occupied by the reference signal and the transmission power occupied by the first data on one RE are limited based on a power proportion.

59. The method of claim 57, wherein the transmission power occupied by the reference signal on REs in the transmission resources is a first proportion of a total power of the REs in the transmission resources.

60. A first communication device, comprising:
a sending unit, configured to perform transmission of a reference signal and first data, wherein transmission resources for the reference signal are superimposed with transmission resources for the first data.

61. A second communication device, comprising:
a receiving unit, configured to receive a reference signal and first data, wherein transmission resources for the reference signal are superimposed with transmission resources for the first data.

62. A communication device, comprising a transceiver, a processor and a memory, wherein the memory is configured to store a computer program, the transceiver is configured to communicate with other devices, and the processor is configured to invoke and execute the computer program stored in the memory, to cause the communication device to perform the method of any one of claims 1 to 59.

63. A chip, comprising a processor configured to invoke and execute a computer program from a memory, to enable a device on which the chip is mounted to perform the method of any one of claims 1 to 59.

64. A computer-readable storage medium configured to store a computer program that, when executed by a device, causes the device to perform the method of any one of claims 1 to 59.

65. A computer program product comprising computer program instructions, wherein the computer program instructions cause a computer to perform the method of any one of claims 1 to 59.

66. A computer program that causes a computer to perform the method of any one of claims 1 to 59.

67. A communication system, comprising:
a first communication device, configured to perform the method of any of claims 1 to 29; and
a second communication device, configured to perform the method of any of claims 30 to 59.
